# EUROPÄISCHE PATENTSCHRIFT

(11) **EP 2 490 372 B1**
(45) Veröffentlichungstag und Bekanntmachung des Hinweises auf die Patenterteilung: **15.03.2017**
(21) Anmeldenummer: 12000512.9
(22) Anmeldetag: 26.01.2012
(51) Int. Cl.: H04L 12/24, G05B 19/418

(54) **Portunabhängiges topologisch geplantes Echtzeitnetzwerk**
Port-independent topological planned real-time network
Réseau en temps réel planifié de manière topologique indépendant du port

(30) Priorität: 17.02.2011 DE 102011011587
(43) Veröffentlichungstag der Anmeldung: 22.08.2012
(73) Patentinhaber: Phoenix Contact GmbH & Co. KG, 32825 Blomberg (DE)
(72) Erfinder: Lessmann, Gunnar, 33039 Nieheim (DE); Schriegel, Sebastian, 32839 Steinheim (DE)
(74) Vertreter: Bill, Burkart Hartmut

(56) Entgegenhaltungen:
- EP-A1- 1 624 614
- WO-A2-2012/052130
- DE-A1- 10 228 823
- US-A1- 2005 243 739

## Beschreibung

### Gebiet der Erfindung

Die vorliegende Erfindung betrifft ein portunabhängiges topologisch geplantes Echtzeitnetzwerk (IRTnet - isochronous real time network), welches insbesondere in industriellen Netzen wie PROFINET-IRT (Process Field Network isochronous real time) eingesetzt werden kann, aber auch in anderen, bevorzugt Ethernet-basierten Kommunikations- bzw. Datenübertragungsnetzen insbesondere im Bereich der (Prozess-)Automatisierungstechnik (sog. Industrial Ethernet).

### Hintergrund der Erfindung

Echtzeitfähige bzw. echtzeitgebundene und insbesondere taktsynchrone oder isochrone Kommunikations- und Datenübertragungsnetze erfordern für ihre Einrichtung eine vollständige Vorgabe der Netzwerktopologie. Beispiele für isochrone Netzwerke, also Netze, die zwischen wenigstens zwei ihrer Teilnehmer eine echtzeitbasierte bzw. echtzeitgebundene und eine synchrone bzw. taktsynchrone und damit eine deterministische und gegebenenfalls äquidistante Kommunikation oder Datenübertragung gewährleisten, stellen Profinet IRT, SERCOS III, VARAN oder EtherCAT dar.

Da die Netzwerkverkabelung im industriellen Umfeld zumeist von Maschine zu Maschine erfolgt, werden diese Industrial Ethernet Netzwerke zumeist in einer Linien- oder Ringtopologie realisiert.

Um deterministische Kommunikationseigenschaften mit Ethernet-Technologie zu erreichen, wird der Zugriff auf das Kommunikationsmedium zusätzlichen Regeln unterworfen. Hier gibt es unterschiedliche Ansätze. Einige Standards reservieren das Medium vollständig für Echtzeittelegramme, andere reservieren Zeitabschnitte für Echtzeittelegramme. Für so eine zeitliche Planung des Medienzugriffes, aber auch für Zwecke der topologischen Adressvergabe, ist die Kenntnis der exakten Netzwerktopologie Voraussetzung.

Der Betrieb eines topologisch geplanten RealTime Ethernet-(RTE)-Netzwerkes erfordert demnach eine exakte Planung im Voraus, an welchem Gerät des topologisch geplanten RTE-Netzwerkes welches zu diesem ersten Gerät benachbarte Gerät an welche vorbestimmte Ethernet-Schnittstelle (sog. "Port") des ersten Gerätes angeschlossen ist. Darüber hinaus ist die Leitungslänge der Verbindung zwischen zwei Geräten häufig vorgegeben.

Die exakte Planung im Voraus betrifft zumindest die logische Konfiguration des Netzwerkes, insbesondere bezüglich der Reihenfolge der zu übertragenden Daten, und gegebenenfalls auch die physische Konfiguration, insbesondere bezüglich der Datenübertragungswege zur Optimierung der Datenübertragung in Abhängigkeit von der Topologie des Netzwerkes.

Eine taktsynchrone bzw. isochrone Kommunikation bzw. Datenübertragung mittels topologisch geplanten RealTime-Ethernet-Netzwerken ist insbesondere für die Kontrolle von Bewegungen in der Antriebstechnik (Motion Control), also etwa für eine Motorsteuerung oder bei Positioniervorgängen erforderlich.

Im Rahmen dieser Anmeldung werden Kommunikations- bzw. Datenübertragungsnetzwerke, also solche Verbundsysteme, die zwischen den durch sie bzw. über sie verbundenen Teilnehmern einen Datenaustausch und somit eine Kommunikation ermöglichen, auch vereinfacht nur als Netze bezeichnet. Bei den erwähnten Teilnehmern handelt es sich insbesondere um Computer, speicherprogrammierbare Steuerungen oder andere Maschinen oder Geräte insbesondere aus dem Bereich der (Prozess-)Automatisierungstechnik wie Sensoren oder Aktoren, die über das Netz miteinander kommunizieren bzw. untereinander Daten austauschen und insbesondere auch Daten verarbeiten.

Das Steuerprogramm ist bevorzugt modular zusammengesetzt und umfasst bevorzugt für jede Geräteart und jede Ausführungsform der Anlage bzw. der Geräteliste entsprechende Programmabschnitte für dessen Steuerung, wobei ein jeweiliger Programmabschnitt einen oder mehrere Funktionsbausteine umfassen kann. Bei Ausführung des Steuerprogramms durch die Steuereinrichtung werden dann die Programmabschnitte ausgeführt, die zur Steuerung der tatsächlich in der Anlage befindlichen und somit an das Netz angeschlossenen und mit der Steuereinrichtung verbundenen Geräte bzw. Teilnehmer erforderlich sind.

Als IO-Konfiguration wird die Definition der Zusammensetzung der Prozess- bzw. IO-Daten in einem Datentelegramm insbesondere hinsichtlich deren Aufbau, Menge und Reihenfolge bezeichnet.

Zur physischen Konfiguration zählt die Definition einer Topologie des Netzes, das heißt der Netzteilnehmer und der Verbindungen zwischen ihnen bzw. ihren Netzwerkschnittstellen.

Ferner werden auf Basis zumindest einiger solcher aus der logischen und physischen Konfiguration hervorgehenden Informationen für ein RTE-Netzwerk durch einen RTE-Planungsalgorithmus zusätzlich noch RTE-Kommunikationsparameter für das Netzwerk errechnet, welche insbesondere Sende- und Empfangszeitpunkte definieren, also Zeiten, zu denen ein Datentelegramm von einem ersten zu einem weiteren Netzteilnehmer zu übertragen ist.

Zur Planung bzw. Projektierung der logischen und physischen Konfiguration eines echtzeitfähigen und isochronen Netzes im Rahmen der Planung und Einrichtung des Netzes zu dessen Inbetriebnahme, etwa nach einem Neuaufbau oder Umbau einer (Prozess-)Automatisierungsanlage, ist zum Beispiel für ein PROFINET IRT-Netzwerk bekannt, dass eine mit der Projektierung solcher Netze bzw. Anlagen vertraute Person hierfür ein sogenanntes Engineeringsystem einsetzt. Solch ein Engineeringsystem ist in der Regel durch ein auf einer Datenverarbeitungseinrichtung ausgeführtes Engineeringtool gebildet, in dessen Kontext auch ein RTE-Planungsalgorithmus zum Errechnen von RTE-Kommunikationsparametern für das RTE-Netzwerk laufen kann. Zum Abschluss dieses Planungsschrittes werden die RTE-Kommunikationsparameter durch den RTE-Planungsalgorithmus berechnet. Anschließend werden vom Engineeringsystem, welches zumindest vorübergehend für diesen Zweck mit dem Netz verbunden ist, insbesondere die folgenden Informationen an die Steuereinrichtung übertragen: ein Steuer- bzw. Steuerungsprogramm, eine Geräteliste, eine IO-Zuordnung, eine IO-Konfiguration, eine Soll-Topologie als Vorgabe für die Einrichtung des Netzes mit seinen Teilnehmern und den Verbindungen sowie die weiteren RTE-Kommunikationsparameter. Im Allgemeinen sind derlei Engineeringsysteme für eine Vielzahl von Netztypen, insbesondere Ethernet-basierte Netze, bekannt und erhältlich.

Aus diesen der Steuereinrichtung vorliegenden Informationen, insbesondere aus der Soll-Topologie und den RTE-Kommunikationsparametern, werden an jeden Teilnehmer des Netzes die für ihn relevanten Teile übertragen. Die Teilnehmer des Netzes prüfen dann selbständig, ob ihre direkten Nachbarteilnehmer mit den geplanten Teilnehmern und Netzschnittstellen gemäß Soll-Topologie übereinstimmen. Sofern jeder Teilnehmer entsprechende Übereinstimmung erkannt hat, kann die Soll-Topologie als Ist-Topologie aktiviert werden und das Netz mit seinen Teilnehmern bzw. die Anlage mit ihren Geräten in Betrieb genommen werden. Sollte jedoch ein Teilnehmer bei der Überprüfung seiner Nachbarn Abweichungen des Ist-Zustands von der Soll-Topologie erkennen, sendet er im bekannten Stand der Technik einen Diagnosealarm an die Steuereinrichtung, die eine Inbetriebnahme des Netzes solange verhindert, bis die Ursache behoben ist.

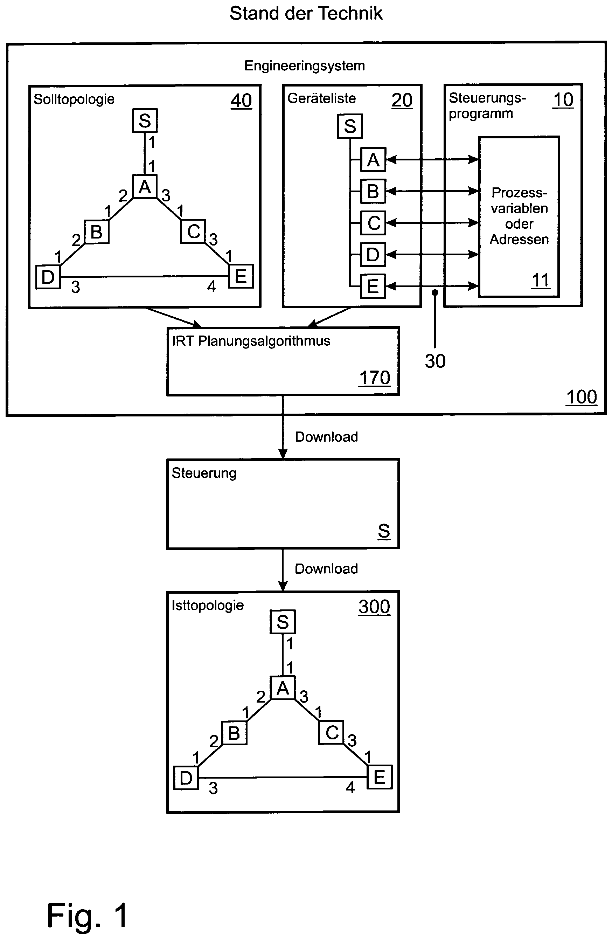

In Figur 1 ist diese bekannte Lösung schematisch abgebildet, wobei die physische Konfiguration durch die Soll-Topologie und die logische Konfiguration durch die IO-Zuordnung repräsentiert ist, wobei Letztere mittels der Pfeile zwischen der Geräteliste und dem Steuerungsprogramm dargestellt ist.

Ein Nachteil dieser in Figur 1 schematisch dargestellten Lösung gemäß dem Stand der Technik ist, dass zwar das Steuerungsprogramm derart gestaltet ist, dass einzelne Geräte, also Anlagen- oder Maschinenteile und -funktionen, durch entsprechende Programmmodule abgebildet sind, so dass mehrere Varianten einer Anlage oder Maschine durch das Steuerungsprogramm gesteuert werden können, dass jedoch bei jeder Änderung der Ist-Topologie bzw. des Ist-Zustands des Netzes, beispielsweise durch Umbau der Anlage, Entfernung und/oder Ergänzung von Geräten, vor allem die Soll-Topologie mittels des Engineeringsystems entsprechend angepasst und zusammen mit den darauf basierend neu berechneten RTE-Kommunikationsparametern erneut an die Steuereinrichtung übertragen werden muss, von wo aus insbesondere die betroffenen Teilnehmer sowie deren Nachbarteilnehmer die entsprechenden Teile der neuen Informationen, insbesondere der Soll-Topologie und RTE-Parameter, erhalten, bevor das Netz bzw. die Anlage im veränderten Zustand wieder in Betrieb genommen werden kann.

Gemäß einer weiteren bekannten Lösung zur Projektierung bzw. Planung eines echtzeitfähigen und isochronen Netzes ist vorgesehen, auf der Steuereinrichtung gleich mehrere alternative Konfigurationen und insbesondere die jeweiligen Soll-Topologien und gegebenenfalls die zugehörigen RTE-Parameter entsprechend der möglichen Varianten einer Anlage oder Maschine vorzuhalten, die dann, ohne dass hierfür nochmals ein Engineeringsystem erforderlich wäre, entsprechend der jeweiligen Ist-Topologie bzw. des jeweiligen Ist-Zustand des Netzes einer bestimmten Variante der Anlage beispielsweise über eine der Steuereinrichtung zugeordnete Mensch-Maschine-Schnittstelle, insbesondere eine einfache, mit der Steuereinrichtung verbundene Anzeige- und Bedieneinheit nur noch ausgewählt werden brauchen.

Ein Problem dieser Lösung ist jedoch, dass es für variantenreiche Maschinen, wie zum Beispiel beim modularen Maschinenbau, wo die Anzahl der Maschinenvarianten nahezu unbegrenzt ist, nicht mehr praktikabel ist, für jede mögliche Variante die erforderliche Konfiguration inklusive der Soll-Topologie und den RTE-Kommunikationsparametern auf der Steuereinrichtung bereits vorzuhalten.

Eine weitere bekannte Lösung gemäß der deutschen Patentanmeldung DE 102006042949.4 basiert auf der Ist-Topologie des Netzes und verzichtet gewissermaßen auf die Vorgabe einer Soll-Topologie. Ein sogenannter Topologieserver in einem Kommunikationsnetz mit weiteren Hauptteilnehmern ist dabei derart programmiert, dass er prüft, ob ein netzwerkinternes Ereignis eingetreten ist, und im Falle des Eintrittes des netzwerkinternen Ereignisses selbsttätig die aktuelle Ist-Topologie ermittelt, anhand von den Hauptteilnehmern zugeordneten Kommunikationsbeziehungen selbsttätig topologieabhängige Kommunikationsdaten ermittelt und selbsttätig an jeden Hauptteilnehmer den für ihn relevanten Teil der topologieabhängigen Kommunikationsdaten übermittelt.

Diese Lösung bietet zwar gegenüber der zuvor beschriebenen Vorgehensweise eine höhere Flexibilität. Von Nachteil ist dabei jedoch das Sicherheitsrisiko, welches aus dem Verzicht auf eine von der Ist-Topologie bzw. dem Ist-Zustand des Netzes unabhängige Soll-Topologie resultiert. Ohne die Möglichkeit eines Soll-Ist-Vergleiches können Fehler, wie zum Beispiel Fehlverdrahtungen oder das Fehlen zumindest eines Gerätes, das entsprechend einer bestimmten Variante der Maschine oder Anlage vorgesehen wäre, nicht zuverlässig erkannt werden. Des Weiteren ist gemäß dieser Lösung zwar vorgesehen, dass eine Bedienperson den automatischen Konfigurationsvorgang von außen anstoßen kann, jedoch ist keine sonstige Möglichkeit zur Einflussnahme auf die Konfiguration vorgesehen.

EP 1 624 614 A1 beschreibt eine automatische Planung von Netzwerkkonfigurationen, wobei das Netzwerk in Teilnetzwerke unterteilt wird. Von der Planung abweichende oder zu ändernde physikalische Topologien werden nicht beschrieben.

US 2005/0243739 A1 zeigt einen Netzwerktopologieerkennungsalgorithmus. Bei geänderter physikalischer Topologie muss, wie bereits zuvor erläutert, ein Engineeringsystem von einer Fachkraft editiert und neu konfiguriert werden.

DE 102 28 823 A1 zeigt ein Verfahren zum Betrieb eines isochronen, zyklischen Kommunikationssystems. Das nachveröffentlichte Dokument WO 2012/052130 A2, welches Stand der Technik gemäß Art. 54(3) EPÜ bildet, zeigt schließlich ein Verfahren und eine Vorrichtung zur Konfiguration von Netzteilnehmern im Rahmen der Planung und Einrichtung einer Datenübertragung zwischen den Netzteilnehmern.

Somit sind zwar Lösungen bekannt, die zumindest ansatzweise eine dynamische Anpassung der physischen Konfiguration an geänderte Netztopologien ermöglichen, jedoch ist keine dynamische Anpassung der logischen Konfiguration an Veränderungen in Bezug auf die IO-Zuordnungen und/oder IO-Konfigurationen bekannt. Vielmehr sind IO-Zuordnungen und/oder IO-Konfigurationen stets starr bereits mittels eines Engineeringsystems vordefiniert und erfordern im Falle einer Anpassung in der Regel erneut die Zuhilfenahme des Engineeringsystems. Dies ist unpraktisch, wenn zum Beispiel ein Gerät einer Anlage oder Maschine etwa aufgrund eines Defekts ausgetauscht werden soll und das neue Gerät zwar die gleichen Funktionen wie das alte Gerät bietet, jedoch beispielsweise eine andere Prozess- bzw. IO-Daten-Beschaltung und/oder eine andere Zusammensetzung der Prozess- bzw. IO-Daten in einem Datentelegramm erfordert, da es anderen Typs ist und/oder von einem anderen Hersteller stammt als das alte Gerät.

Der Umgang mit einem Engineeringsystem wird in aller Regel nur von entsprechend spezialisiertem Personal beherrscht und kann somit den Betreiber einer Anlage überfordern.

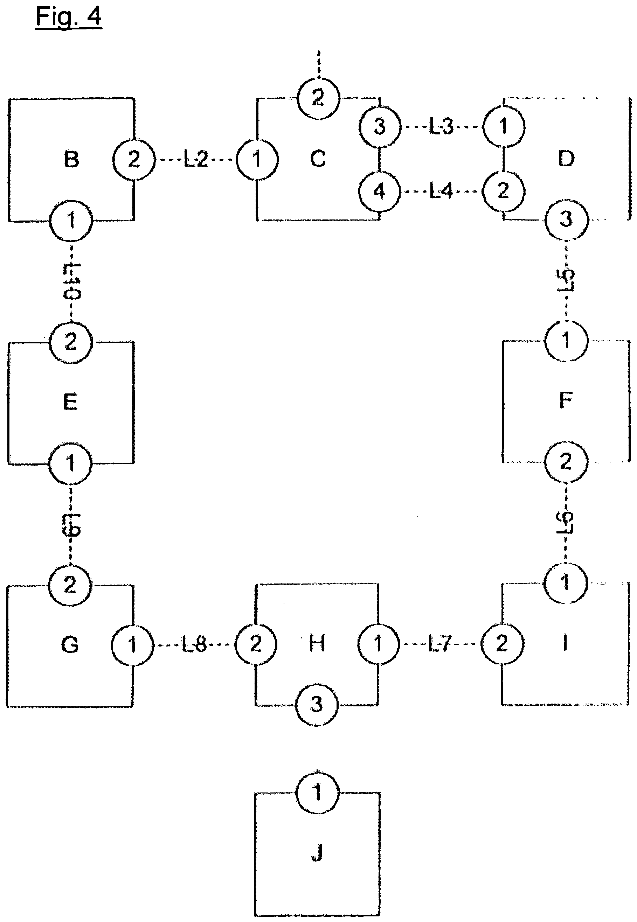

Es ist üblich, diese Planung mittels softwarebasierten Werkzeugen, die z.B. eine grafische Darstellung und Editierung der Netzwerktopologie ermöglichen, zu erstellen. Figur 4 zeigt dazu eine Beispieltopologie.

Die im Voraus vollständig zu definierende Vernetzung der Topologie hat Einschränkungen zur Folge. Ein PROFINET-System stellt beispielsweise sicher, dass ein RTE System nur anläuft wenn alle installierten Nachbargeräte auch den im Voraus geplanten Nachbargeräten entsprechen, hierbei müssen nicht nur die Namen der Geräte sondern auch die belegten Ethernet Schnittstellen mit der Planung übereinstimmen. Das hat zur Folge, dass Fehler in der Installationsphase oder nach einem Gerätetausch dazu führen können, dass eine Maschine und/oder eine ganze Anlage nicht anlaufen kann. Dieser Zustand lässt sich nur durch Diagnose des Unterschieds zwischen der Soll- und der Istkonfiguration sowie der Korrektur der Installation beheben. Dies wird in bisherigen Verfahren dadurch überprüft, indem jedes Gerät auch die geplanten Nachbargeräte mit den jeweiligen Portinformationen mitgeteilt bekommt. Werden dabei Unterschiede zwischen der Ist- und der im Vorhinein geplanten Sollkonfiguration festgestellt, wird eine Diagnose ausgelöst, die üblicherweise zum Stopp des Anwenderprogramms und damit möglicherweise zum Stillstand der gesamten Anlage führt.

Die exakte Planung der Solltopologie über ein Engineeringsystem erfordert von einem Anwender eine genaue Festlegung, wie die Geräte und deren Ethernet Schnittstellen zu installieren sind. Diese Überlegungen und auch die Installation sind bei gewöhnlichem Ethernet durch den "Plug&Play" Ansatz, der durch eine dynamische Portadressierung erlaubt ist, unüblich.

Zusammenfassend bedeutet das, dass die Installation des PROFINET Netzwerkes mit der Planung exakt übereinstimmen muss. Dabei muss der Installateur die Vorgaben auch bezüglich der zu wählenden Schnittstellen exakt einhalten.

Dies ist in der Praxis nicht immer einfach, da bei der Installation durch lokale Gegebenheiten u.U. von der Planung abgewichen werden muss. Diese Abweichungen führen zu einem erhöhten Aufwand bei der Anpassung der Planung, da dadurch die Schnittstellenbelegung wieder überarbeitet werden muß und das Netzwerk neu zu konfigurieren ist.

Auch bei einem Austausch eines der Geräte, beispielsweise aufgrund von Wartungsarbeiten oder eines Defektes, kommt es immer wieder vor, dass eine Fehlwahl der Netzwerkschnittstelle zu einer langwierigen Fehlersuche führt. Insbesondere kann es sein, dass bei einem Gerätetausch ein Fehler auftritt, weil sich die Netzwerkschnittstelle nicht zu der vorher verbauten zuordnen lässt. Der Einsatz von PROFINET IRT in Praxistests hat gezeigt, dass das Vertauschen von Ports eine sehr häufige Fehlerursache ist.

### Allgemeine Beschreibung der Erfindung

Die Erfindung hat sich daher die Aufgabe gestellt, ein Verfahren bereit zu stellen, welches zumindest eine der genannten Problemstellungen zu lösen vermag.

Eine der vorliegenden Erfindung zugrundeliegende Aufgabe besteht daher darin, für die Planung und Realisierung einer Anlage sowie für den Austausch eines Gerätes trotz der sicherheitsrelevanten Vorgabe der Solltopologie und den dadurch ermöglichten Soll-Ist-Vergleich auch mit vertauschten oder anderweitig falsch verbundenen Netzwerkverbindungen zwischen den Netzteilnehmern den Betrieb aufnehmen zu können.

Bei der Erstellung der Sollstruktur der Netzwerktopologie muss dabei nicht ein bestimmter Port definiert werden und insbesondere müssen beim Aufbau der physischen Netzwerkstruktur der Ethernet-Verbindungen nicht exakt die geplanten Ports der jeweiligen Netzteilnehmer verwendet werden. Vielmehr ist es Aufgabe der Erfindung, auch bei Verwendung von nicht vorgabegemäßen Netzwerkschnittstellen den Betrieb des Netzwerkes bzw. der Anlage im Gesamten zu ermöglichen.

Die vorherige Planung im Engineeringsystem kann demnach auch ohne detaillierte Vorgabe der Netzwerkschnittstellen der Netzteilnehmer auskommen. Dadurch ist die Planung vereinfacht und der sichere Betrieb des Netzwerkes dennoch gewährleistet.

Insbesondere soll diese Möglichkeit für Netzwerke mit einer echtzeitgebundenen und synchronen bzw. isochronen Datenübertragung zwischen den Teilnehmern geeignet sein.

Insbesondere soll durch die Erfindung der Einsatz eines Engineeringsystems zur Aufrechterhaltung des Betriebs weitestgehend überflüssig sein.

Insbesondere soll weiterhin ein Soll-Ist-Vergleich vor allem hinsichtlich der Netztopologie möglich sein.

Insbesondere soll jedoch das Vorbereiten und Vorhalten einer Vielzahl von Soll-Topologien vermieden werden, so dass beispielsweise eine Vertauschung einer Netzwerkschnittstelle nicht eine neue Soll-Topologie darstellt und damit eine mögliche Fehlerquelle darstellt.

Insbesondere soll eine logische Konfiguration und/oder physische Konfiguration der Kommunikation und des Netzes möglich sein.

Insbesondere soll diese Möglichkeit für variantenreiche Anlagen oder Maschinen geeignet sein.

Die Aufgabenstellung wird durch den Gegenstand des unabhängigen Anspruchs 1 gelöst. Bevorzugte Ausführungsformen sind in den Unteransprüchen wiedergegeben.

Erfindungsgemäß vergleicht jedes Gerät die geplanten (Soll-) Nachbargeräte und deren (Soll-) Ethernet Ports mit den installierten (Ist-) Nachbargeräten und den (Ist-) Ethernet Ports. Stimmt die vorgegebene (Soll-)Nachbarschaft mit der physikalischen (Ist-)Nachbarschaft überein, werden die Portinformationen aus der geplanten Sollkonfiguration auf die physikalischen Ports angewandt.

Durch eine Sollvorgabe, also einer Planung im Voraus, zumindest der Benachbarung der zumindest zwei Netzteilnehmer kann die Gewährleistung einer Kommunikationsplanung ermöglicht werden. Durch die Kommunikationsplanung, die im Voraus festgelegt werden kann, ist der Pfad einer Übertragung durch das Netzwerk anhand der Geräte festgelegt. Eine Kommunikationsplanung anhand der Ethernet Ports der Geräte ist nicht mehr nötig, was eine flexiblere Anbringung der Netzwerkleitungen bei gleichbleibender Gewährleistung einer Mindestsicherheit ermöglicht.

Die Netzwerkverbindung wird freigegeben, wenn die Überprüfung der physikalischen Ist-Konfiguration der Portkonnektierung anhand der Sollkonfiguration der Netzwerktopologie eine Übereinstimmung der Benachbarung ergibt. Das RTE-Netzwerk läuft nach Durchführung des Soll/Ist-Vergleichs an, wobei die Netzwerkverbindungen freigegeben werden. Die Anwendung der mittels der Kommunikationsplanung festgelegten Kommunikationsparameter auf den zumindest einen Port eines Gerätes wird durch die Überprüfung der Konfiguration bestimmt. Das heißt, erst wenn die Überprüfung der physikalischen Ist-Konfiguration der Portkonnektierung anhand der Sollkonfiguration der Netzwerktopologie eine Übereinstimmung der Benachbarung ergibt, werden die Kommunikationsparameter auf die zumindest eine Netzwerkschnittstelle des zumindest einen Gerätes angewandt. Dies aktiviert, je nach Wahl der Kommunikationsparameter, den Port bzw. und/oder die Verbindung.

Diese Verbesserung kann durch Implementierungen in den Geräten selbst umgesetzt werden. Es muss weder, falls verwendet, der PROFINET Standard erweitert werden, noch müssen Engineeringsysteme geändert werden. Hierdurch kann bei Netzwerken, die nach dem bisherigen Stand der Technik geplant sind, die Handhabung während der Installation oder bei Wartung und Gerätetausch bereits deutlich vereinfacht und verbessert werden, ohne dass das jeweilige Netzwerk vollständig neu aufgebaut werden muss.

Bei der Planung der Solltopologie kann für ein neues oder auch ein bestehendes Netzwerk im Weiteren auf konkrete Portinformationen verzichtet werden. Es wird lediglich im Voraus geplant, welche Geräte mit welchen Nachbargeräten verbunden werden. An die Verbindung zwischen den Geräten können noch Attribute wie Leitungslänge oder Anzahl der Verbindungen (im Beispiel zwischen "C" und "D") angegeben werden. Dies ermöglicht eine Vereinfachung des Engineeringprozesses für den Anwender aber auch für die Hersteller von Engineeringwerkzeugen selbst.

Unter Ansprechen auf wenigstens eine von einer Bedienperson angegebene konfigurationsrelevante Information generiert die Vorrichtung eine Menge von für das Konfigurieren zumindest des wenigstens einen weiteren Teilnehmers erforderlichen Konfigurationsdaten und übermittelt zumindest eine Teilmenge dieser generierten Menge von Konfigurationsdaten über das Netzwerk an den wenigstens einen weiteren Teilnehmer.

Zur Programmierung der Vorrichtung ist im Wesentlichen nur einmal ein Engineeringsystem oder ein vergleichbares System nötig. Danach ist ein Teilnehmer, der mit dem Netz und über dieses mit der Vorrichtung verbunden ist, ohne nochmalige Zuhilfenahme eines Engineeringsystems hinsichtlich des Datenaustauschs über das Netz gemäß eines Soll-Zustands konfigurierbar, wobei die Bedienperson in den Konfigurationsvorgang aufgrund der erforderlichen Angabe zumindest einer konfigurationsrelevanten Information eingebunden ist. Von Vorteil ist ferner, dass die Bedienperson für den Umgang mit einem in der Regel sehr komplexen Engineeringsystem nicht ausgebildet sein muss, um einen Netzteilnehmer hinsichtlich des Datenaustauschs über das Netz konfigurieren zu können.

Zweckmäßiger Weise ist die wenigstens eine konfigurationsrelevante Information mittels einer der Vorrichtung bevorzugt zugeordneten Mensch-Maschine-Schnittstelle, insbesondere mittels einer mit der Vorrichtung verbundenen Bedieneinheit mit Ein- und Ausgabemitteln, von der Bedienperson angebbar.

Bevorzugt ist die Vorrichtung programmiert, zumindest den wenigstens einen weiteren Teilnehmer hinsichtlich logischer und/oder physischer Aspekte des Datenaustauschs über das Netz zu konfigurieren.

Logische Aspekte sind zum Beispiel, wie bereits eingangs erwähnt, die zu sendenden bzw. empfangenen IO-Daten, die IO-Zuordnung und die IO-Konfiguration. Physische Aspekte betreffen insbesondere, wie ebenfalls bereits erwähnt, die Topologie des Netzes.

Somit ist die Vorrichtung sowie das Verfahren vorteilhafter Weise einerseits für die Konfiguration von Teilnehmern in Netzen wie PROFINET IRT, die eine physische Konfiguration erfordern, einsetzbar bzw. anwendbar.

Wie noch genauer in Verbindung mit der Beschreibung der Figuren dargelegt wird, ist die durch die vorliegende Erfindung ohne Zuhilfenahme eines Engineeringsystems ermöglichte logische Konfiguration insbesondere von Vorteil, wenn zum Beispiel ein Gerät einer Anlage oder Maschine ausgetauscht werden soll und das neue Gerät zwar die gleichen Funktionen wie das alte Gerät bietet, jedoch beispielsweise eine andere Prozess- bzw. IO-Daten-Beschaltung und/oder eine andere Zusammensetzung der Prozess- bzw. IO-Daten in einem Datentelegramm erfordert, da es anderen Typs ist und/oder von einem anderen Hersteller stammt als das alte Gerät. Dadurch kann insbesondere auch die Konfiguration der Netzwerkschnittstelle betroffen sein.

Erwähnt sei an dieser Stelle, dass die Vorrichtung und das Verfahren aber auch derart ausgeführt sein kann, dass nur die logische oder nur die physische Konfiguration mittels der Vorrichtung erfolgt, während die jeweils andere Konfiguration, sofern es das jeweils vorliegende Netz erfordert, weiterhin mittels eines Engineeringsystems erfolgt.

Besonders bevorzugt umfasst die Menge der generierten und für das Konfigurieren zumindest des wenigstens einen weiteren Teilnehmers hinsichtlich physischer Aspekte erforderlichen Konfigurationsdaten eine Soll-Topologie für das Netz.

Die Soll-Topologie wird dabei bezüglich der vom Benutzer angegebenen Menge von zum Beispiel für die jeweils vorliegende Variante einer modular aufgebauten Anlage oder Maschine konfigurationsrelevanten Informationen von der Vorrichtung generiert. Somit ist es zum einen nicht erforderlich mehrere Soll-Topologien für mehrere mögliche Varianten vorzuhalten, von denen dann die jeweils passende auszuwählen wäre. Zum anderen ist aber weiterhin eine tatsächliche Soll-Topologie als Soll-Vorgabe gegeben, die einen tatsächlichen Soll-Ist-Vergleich, und damit insbesondere das Erkennen von Fehlern wie zum Beispiel Fehlverdrahtungen oder das Fehlen zumindest ein Gerätes, dass entsprechend einer bestimmten Variante der Maschine oder Anlage vorgesehen wäre, ermöglicht und somit die Sicherheit gewährleistet.

Je nach Art bzw. Spezifikation des Netzes und seiner weiteren Teilnehmer, umfasst die Vorrichtung zweckmäßiger Weise Mittel zum Datenaustausch, die für einen zyklischen, echtzeitgebundenen und/oder taktsynchronen Datenaustausch über das Netz ausgebildet sind. Dabei ist die Vorrichtung, die bevorzugt Mittel zum echtzeitgebundenen Datenaustausch umfasst, besonders bevorzugt programmiert, zumindest den wenigstens einen weiteren Teilnehmer hinsichtlich eines echtzeitgebundenen Datenaustauschs über das Netz zu konfigurieren. Alternativ oder ergänzend ist die Vorrichtung, die bevorzugt Mittel zum taktsynchronen Datenaustausch umfasst, besonders bevorzugt programmiert, zumindest den wenigstens einen weiteren Teilnehmer hinsichtlich eines taktsynchronen Datenaustauschs über das Netz zu konfigurieren.

Bevorzugt umfasst die Vorrichtung Mittel zum Datenaustausch für einen Datenaustausch über das Netz, die gemäß PROFINET IRT-Spezifikation ausgebildet sind.

Besonders bevorzugt umfasst die Menge der generierten und für das Konfigurieren zumindest des wenigstens einen weiteren Teilnehmers erforderlichen Konfigurationsdaten eine Menge von von der Vorrichtung berechneten RTEspezifischen Parametern. Somit ist die Vorrichtung vorteilhafter Weise ausgebildet, auch die für die Konfiguration etwa eines PROFINET IRT-Netzes erforderlichen RTE-Kommunikationsparameter zu berechnen, so dass weder mehrere RTE-Parametersätze für mehrere mögliche Varianten einer modular aufgebauten Anlage oder Maschine vorzuhalten sind, von denen dann der jeweils passende auszuwählen wäre, noch jeweils ein Engineeringsystem zur erneuten Berechnung dieser Parameter heranzuziehen ist.

Gemäß einer besonders bevorzugten Ausführungsvariante liest die Vorrichtung eine Menge von konfigurationsrelevanten Informationen aus dem Netz und/oder dem wenigstens einen weiteren Teilnehmer aus, generiert basierend darauf die Menge von für das Konfigurieren zumindest des wenigstens einen weiteren Netzteilnehmers erforderlichen Konfigurationsdaten und übermittelt unter Ansprechen auf wenigstens eine von der Bedienperson angegebene konfigurationsrelevante Information, insbesondere eine Freigabe der generierten Menge von Konfigurationsdaten, über das Netz zumindest eine Teilmenge dieser generierten Menge von Konfigurationsdaten an den wenigstens einen weiteren Teilnehmer.

Gemäß einer bevorzugten Ausführungsvariante überprüft die Vorrichtung die Menge der generierten und für das Konfigurieren zumindest des wenigstens einen weiteren Teilnehmers erforderlichen Konfigurationsdaten zunächst auf Plausibilität in sich, bevor sie zumindest eine Teilmenge dieser generierten Menge von Konfigurationsdaten an den wenigstens einen weiteren Teilnehmer über das Netz übermittelt.

Gemäß einer besonders bevorzugten Ausführungsvariante überprüft die Vorrichtung die Menge der generierten und für das Konfigurieren zumindest des wenigstens einen weiteren Teilnehmers erforderlichen Konfigurationsdaten zunächst auf Plausibilität hinsichtlich des Ist-Zustands des Netzes und zumindest des wenigstens einen weiteren Teilnehmers überprüft, bevor sie zumindest eine Teilmenge dieser generierten Menge von Konfigurationsdaten an den wenigstens einen weiteren Teilnehmer über das Netz übermittelt.

Bevorzugt ist die Vorrichtung programmiert, sich selbst mittels zumindest einer Teilmenge der generierten Menge von Konfigurationsdaten hinsichtlich des Datenaustauschs über das Netz zu konfigurieren.

Gemäß einer besonders bevorzugten Ausführungsvariante ist die Vorrichtung derart programmiert, nach dem Konfigurieren den wenigstens einen weiteren Teilnehmer zu steuern, wobei die Vorrichtung insbesondere eine speicherprogrammierbare Steuerung ist. Somit ist es erfindungsgemäß bevorzugt vorgesehen, dass eine speicherprogrammierbare Steuerung derart programmiert ist, dass sie Teilnehmer eines Netzes, welche insbesondere Geräte einer Anlage oder Maschine sind, nicht nur steuern, sondern im Vorfeld der Betriebsphase, diese auch hinsichtlich des Datenaustauschs über das Netz konfigurieren kann, und also hierfür neben dem Programmcode eines Steuerprogramms auch Programmcode eines Konfigurationsprogramms ausführt.

Ferner sieht die vorliegende Erfindung gemäß einem anderen der unabhängigen Ansprüche ein Datenverarbeitungs- und - übertragungssystem vor, umfassend eine Vorrichtung gemäß einer der vorstehend beschriebenen Ausführungsformen sowie wenigstens einen weiteren Teilnehmer, die über ein Netz miteinander verbunden sind und Daten miteinander austauschen können.

Ferner sieht die vorliegende Erfindung gemäß einem anderen der unabhängigen Ansprüche einen Datenträger mit einem darauf gespeicherten Programmcode vor, wobei der Programmcode derart ausgebildet ist, dass eine Vorrichtung gemäß einer der vorstehend beschriebenen Ausführungsformen ausgebildet ist, wenn sie mit dem Programmcode programmiert ist.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Von der beigefügten Zeichnungen zeigen
- Figur 1: eine schematische Darstellung einer aus dem Stand der Technik bekannten Lösung zur Konfiguration von Teilnehmern eines Netzes;
- Figur 2a: eine schematische Darstellung einer erfindungsgemäßen Ausführungsvariante zur Konfiguration von Teilnehmern eines Netzes;
- Figur 2b und 2c: eine schematische Darstellung eines Beispiel für die Konfiguration von Geräten einer zweiten erweiterten Anlagenvariante (Figur 2c) ausgehend von einer ersten Grundvariante der Anlage (Figur 2b) unter Anwendung der Ausführungsvariante der Erfindung gemäß Figur 2a;
- Figur 3a: eine schematische Darstellung einer weiteren erfindungsgemäßen Ausführungsvariante zur Konfiguration von Teilnehmern eines Netzes;
- Figur 3b und 3c: eine schematische Darstellung eines Beispiels für die Konfiguration von Geräten einer Anlage unter Anwendung der Ausführungsvariante der Erfindung gemäß Figur 3a, nachdem ein Gerät eines ersten Typs (Figur 3b) durch ein Gerät eines zweiten Typs (Figur 3c) ersetzt wurde;
- Figur 4: eine schematische Darstellung eines ringtopologischen Netzwerks

### Detaillierte Beschreibung der Erfindung

Die Figur 1 zeigt eine schematische Darstellung einer aus dem Stand der Technik bekannten Lösung zur Konfiguration von Teilnehmern eines Netzes, wie sie im Wesentlichen bereits eingangs beschrieben wurde.

Zur logischen und physischen Konfiguration der Geräte A, B, C, D und E sowie der Steuerung S, welche zu einer bestimmten Variante einer in Figur 1 nicht näher gezeigten industriellen Anlage gehören und gleichzeitig Teilnehmer eines Netzes sind, über das sie gemäß einer Ist-Topologie 300 verbunden sind und Daten übertragen bzw. untereinander austauschen können sollen, ist gemäß der in Figur 1 wiedergegebenen, aus dem Stand der Technik bereits bekannten Lösung stets ein Engineeringsystem 100 erforderlich, das in der Regel durch ein auf einer Datenverarbeitungseinrichtung, in der Regel einem PC oder einer Workstation, ausgeführtes Engineeringtool gebildet ist.

Die Ist-Topologie 300 gestaltet sich derart, dass zunächst die Steuerung S über ihre Netzschnittstelle 1 mit der Netzschnittstelle 1 des Geräts A verbunden ist. Das Gerät A besitzt neben der Netzschnittstelle 1 zwei weitere Netzschnittstellen, nachfolgend auch als Ports bezeichnet, wobei es über den Port 2 mit dem Port 1 des Geräts B und über den Port 3 mit dem Port 1 des Geräts C verbunden ist. Das Gerät B ist über seinen weiteren Port 2 mit dem Port 1 des Geräts D verbunden und das Geräte C hat über seinen weiteren Port 3 eine Verbindung zum Port 1 des Geräts E. Zudem besteht noch eine Verbindung zwischen dem Port 3 des Geräts D und dem Port 4 des Geräts E.

Im Rahmen der Planung bzw. Projektierung einer Anlage mit wenigstens einer Steuerung S und einer Anzahl von Geräten A bis E, die als Teilnehmer eines Netzes per Datenaustausch in Kommunikation stehen wird das Engineeringsystem 100 für mehrere Teilaufgaben einsetzt. Im Allgemeinen sind derlei Engineeringsysteme für eine Vielzahl verschiener Netztypen bekannt und erhältlich.

Zum einen dient es dem Entwurf eines Steuer- bzw. Steuerungsprogramms 10 mit dem eine Steuereinrichtung wie die Steuerung S programmierbar ist, Geräte wie die Geräte A bis E, welche insbesondere Sensoren oder Aktoren sind, während des Betriebs der Anlage zu steuern. Das Steuerungsprogramm 10 umfasst hierzu entsprechenden Programmcode für zumindest jedes der Geräte A bis E. Zum anderen wird mittels des Engineeringsystems 100 eine Teilnehmer- bzw. Geräteliste 20 erstellt, welche insbesondere Datensätze für die Steuerung S und die Geräte A bis E enthält, wobei jeder Gerätedatensatz eine Menge von Informationen umfasst, die das jeweilige Gerät detailliert beschreiben. Angemerkt sei, dass auch wenn die Geräteliste in der Figur 1 hierarchisch dargestellt ist, derart dass die Geräte A bis E der Steuerung S untergeordnet sind, dies zumindest nicht als Topologie zu verstehen ist.

Unter Einbeziehung der Geräteliste 20 sowie des Steuerungsprogramms 10 erfolgt mittels des Engineeringsystems 100 ferner die logische und physische Konfiguration der Netzteilnehmer S und A bis E hinsichtlich eines Datenaustauschs über das Netz, welches in diesem Fall als PROFINET IRT ausgeführt ist, so dass die Kommunikation zwischen den Netzteilnehmern zyklisch, echtzeitgebunden und taktsynchron erfolgt bzw. erfolgen soll.

Die logische Konfiguration umfasst dabei zum Beispiel die IO-Zuordnung 30, welche in Figur 1 mittels der Pfeile zwischen der Geräteliste 20 enthaltenen Gerätedatensätzen und dem Steuerungsprogramm 10 dargestellt ist. Bei der IO-Zuordnung, welche auch als Mapping bezeichnet wird, werden einzelne Prozessvariablen oder Adressen 11 des Steuerungsprogramms 10 den in den jeweiligen Gerätedatensätzen der Geräteliste 20 definierten Prozess- bzw. IO-Datenobjekten zumindest der Geräte A bis E zugeordnet. Ebenfalls zur logischen Konfiguration gehört in der Regel die in Figur 1 nicht dargestellte IO-Konfiguration, welche die Definition der Zusammensetzung der Prozess- bzw. IO-Daten der einzelnen Teilnehmer in einem Datentelegramm insbesondere hinsichtlich deren Aufbau, Menge und Reihenfolge betrifft.

Die physische Konfiguration ist in Figur 1 durch die Soll-Topologie 40 repräsentiert, mittels welcher die Kommunikationsverbindungen zwischen den Netzteilnehmern, also den Geräten A bis E sowie der Steuerung S, projektiert werden. Hierzu wird auf die in den Gerätedatensätzen der Geräteliste 20 enthaltenen Informationen und Bezeichnungen bezüglich einzelnen Geräte A bis E und der Steuerung S und vor allem deren Netzschnittstellen zurückgegriffen.

Grundsätzlich sei noch einmal erwähnt, dass die Planung der logischen Konfiguration im Wesentlichen unabhängig von der physischen Konfiguration, insbesondere unabhängig von der Topologie, erfolgen kann. Ferner kann die Planung der physischen Konfiguration, also insbesondere der Soll-Topologie, im Wesentlichen unabhängig von der logischen Konfiguration erfolgen, sofern zumindest eine Geräteliste vorhanden ist, die wenigstens die Bezeichnungen der einzelnen Teilnehmer und deren einzelner Ports enthält.

Darüber hinaus umfasst das Engineeringsystem 100 gemäß Figur 1 auch einen RTE-Planungsalgorithmus 170 zum Errechnen von RTE-Kommunikationsparametern für das PROFINET IRT-basierte Netz, welche beispielsweise Sende- und Empfangszeitpunkte definieren, also Zeiten, zu denen ein Datentelegramm von einem zu einem anderen Teilnehmer zu übertragen ist, insbesondere auf Basis von Informationen aus der Soll-Topologie 40 und der Teilnehmer- bzw. Geräteliste 20 sowie der IO-Konfiguration.

Im Anschluss an die Planung der logischen und physischen Konfiguration mittels des Engineeringsystems 100 werden die gesamten Konfigurationsdaten einschließlich der Geräteliste 20 und des Steuerungsprogramms 10 an die Steuerung S übertragen (in der Figur als Download bezeichnet), mit welcher das Engineeringsystem 100 zumindest vorübergehend verbunden ist.

Aus diesen nunmehr auf der Steuereinrichtung S vorliegenden Konfigurationsdaten werden dann an jeden weiteren Teilnehmer des Netzes, also an die Geräte A bis E, die für ihn relevanten Teile übertragen (in der Figur als Download bezeichnet). Die Teilnehmer des Netzes prüfen dann selbstständig, ob ihre direkten Nachbarteilnehmer mit den geplanten Teilnehmern und Netzschnittstellen gemäß Soll-Topologie übereinstimmen.

Sofern jeder Teilnehmer entsprechende Übereinstimmung erkannt hat, kann die projektierte mit ihren Geräten bzw. das das Netz mit seinen Teilnehmern aktiviert und in Betrieb genommen werden. Sollte jedoch ein Teilnehmer bei der Überprüfung seiner Nachbarn Abweichungen des Ist- vom Soll-Zustand erkennen, sendet er einen Diagnosealarm an die Steuerung S, die daraufhin eine Inbetriebnahme der Anlage und des Netzes solange verhindert, bis der ursächliche Fehler behoben ist.

Auf diese Art und Weise muss gemäß der in Figur 1 dargestellten, aus dem Stand der Technik bekannten Lösung vorgegangen werden, sobald sich, etwa aufgrund einer Umgestaltung der Gestaltung der Anlage gemäß einer anderen Variante, hinsichtlich der Teilnehmer der Ist-Topologie Änderungen ergeben, sei es dass zumindest ein Teilnehmer hinzugefügt oder einer entfernt wird oder die Teilnehmer anders miteinander verbunden werden.

Die Nachteiligkeit dieser bekannten Lösung ist offensichtlich und wurde eingangs bereits dargelegt.

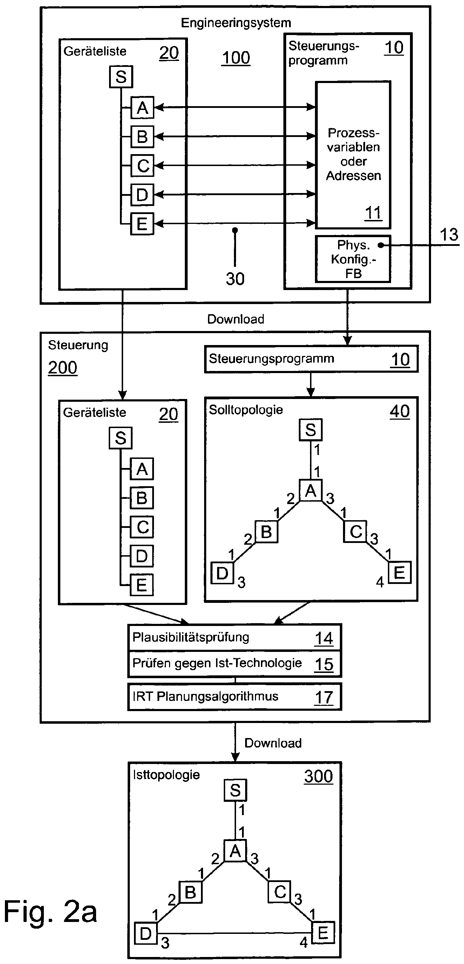

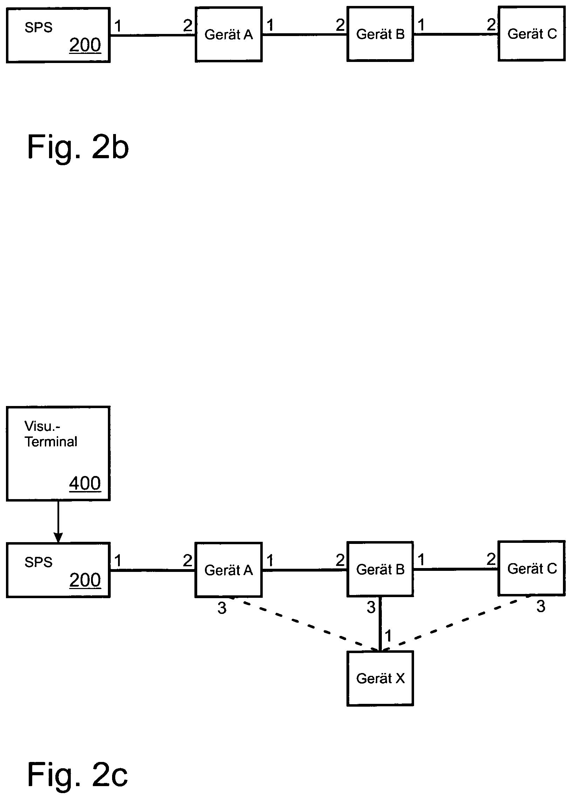

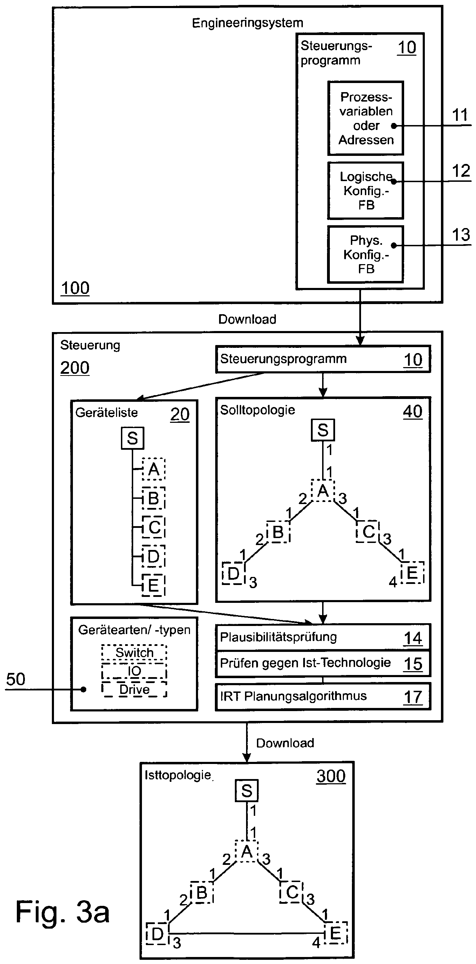

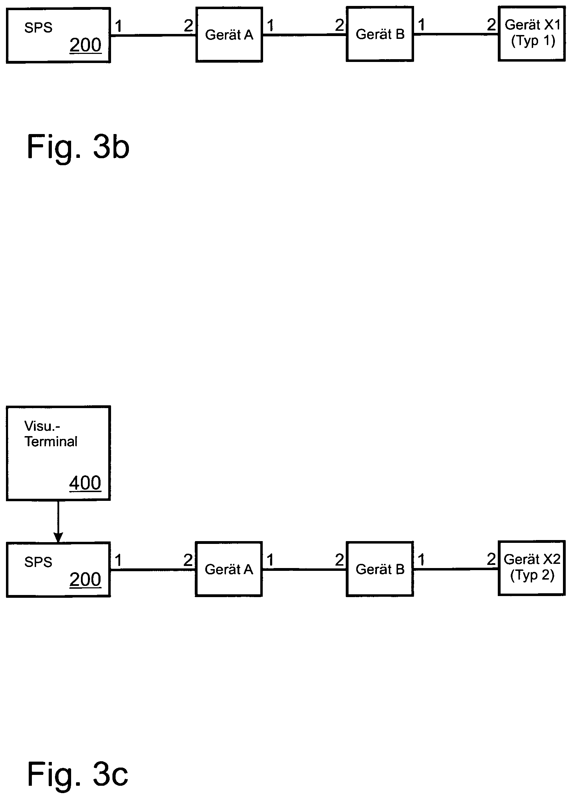

Zur besseren Nachvollziehbarkeit werden bei der nachfolgenden Beschreibung erfindungsgemäßer Ausführungsvarianten anhand der Figuren 2a, 2b und 2c sowie 3a, 3b und 3c die im Rahmen der vorangegangenen Beschreibung einer bereits bekannten Lösung gemäß Figur 1 eingeführten Bezugszeichen beibehalten, sofern es sich um vergleichbare Merkmale handelt.

Die Figur 2a zeigt eine schematische Darstellung einer erfindungsgemäßen Ausführungsvariante zur Konfiguration von Teilnehmern eines Netzes.

Bei den zu konfigurierenden Netzteilnehmern handelt es sich um die Geräte A, B, C, D und E sowie die Steuerung S, welche zu einer bestimmten Variante einer in Figur 2a nicht näher gezeigten industriellen Anlage gehören und über ein Netz gemäß einer Ist-Topologie 300 verbunden sind, über das sie Daten übertragen bzw. untereinander austauschen können sollen. Die Ist-Topologie 300 gestaltet sich derart, dass zunächst die Steuerung S über ihre Netzschnittstelle 1 mit der Netzschnittstelle 1 des Geräts A verbunden ist. Das Gerät A besitzt neben der Netzschnittstelle 1 zwei weitere Netzschnittstellen, nachfolgend auch als Ports bezeichnet, wobei es über den Port 2 mit dem Port 1 des Geräts B und über den Port 3 mit dem Port 1 des Geräts C verbunden ist. Das Gerät B ist über seinen weiteren Port 2 mit dem Port 1 des Geräts D verbunden und das Geräte C hat über seinen weiteren Port 3 eine Verbindung zum Port 1 des Geräts E. Zudem besteht noch eine Verbindung zwischen dem Port 3 des Geräts D und dem Port 4 des Geräts E. Sowohl die Steuerung S als auch die Geräte A bis E können neben den in der Figur 2a gezeigten Netzschnittstellen bzw. Ports jeweils noch weitere besitzen, die jedoch in der Figur nicht gezeigt sind, da sie gemäß der Ist-Topologie 300 keine Netzverbindung aufweisen.

Im Rahmen der Planung bzw. Projektierung einer Anlage mit zweckmäßiger Weise wenigstens einer Steuerung und einer Anzahl von Geräten, die als Teilnehmer eines Netzes per Datenaustausch in Kommunikation stehen, wird auch ein Engineeringsystem 100 für mehrere Teilaufgaben einsetzt. Aus der nachfolgenden detaillierten Beschreibung einer Ausführungsvariante werden jedoch die Unterschiede gegenüber dem Stand der Technik, wie insbesondere anhand der Figur 1 dargelegt, und die daraus resultieren Vorteile deutlich.

Zum einen dient das Engineeringsystem 100 dem Entwurf eines Steuer- bzw. Steuerungsprogramms 10, mit dem eine Steuereinrichtung wie die Steuerung S programmierbar ist, Geräte wie die Geräte A bis E, welche insbesondere Sensoren oder Aktoren sind, während des Betriebs der Anlage zu steuern. Das Steuerungsprogramm 10 umfasst hierzu entsprechenden Programmcode für zumindest jedes der Geräte A bis E, insbesondere aber auch bereits für weitere Geräte, die bei anderen Varianten der Anlage als der gemäß Figur 2a zum Einsatz kommen würden. Zum anderen wird mittels des Engineeringsystems 100 eine Teilnehmer- bzw. Geräteliste 20 erstellt, welche insbesondere Datensätze für die Steuerung S und die Geräte A bis E enthält, bevorzugt aber auch bereits für weitere Geräte, die bei anderen Varianten der Anlage zum Einsatz kommen würden, wobei jeder Gerätedatensatz eine Menge von Informationen umfasst, die das jeweilige Gerät detailliert beschreiben, insbesondere einen eindeutigen Gerätenamen oder eine sonstige Bezeichnung, die eine eindeutige Identifizierung des jeweiligen Geräts erlaubt, Informationen zu Geräteart, -typ und -hersteller, eine Funktionsbeschreibung, eine Definition der Prozessdaten des Geräts, eine eindeutige Bezeichnung jeder Netzschnittstelle des Geräts und den jeweiligen Netzschnittstellentyp, zum Beispiel hinsichtlich des erforderlichen Übertragungsmediums (etwa Kupfer oder Glasfaser). Aber auch in diesem Beispiel bildetet die Geräteliste noch keine Topologie ab.

Unter Einbeziehung der Geräteliste 20 sowie des Steuerungsprogramms 10 erfolgt mittels des Engineeringsystems 100 ferner die logische Konfiguration insbesondere der Netzteilnehmer S und A bis E hinsichtlich eines Datenaustauschs über das Netz, welches in diesem Fall wiederum als PROFINET IRT ausgeführt ist, so dass die Kommunikation zwischen den Netzteilnehmern zyklisch, echtzeitgebunden und taktsynchron erfolgt bzw. erfolgen soll. Die logische Konfiguration umfasst dabei zum Beispiel wieder die IO-Zuordnung 30, welche in Figur 2a mittels der Pfeile zwischen der Geräteliste 20 enthaltenen Gerätedatensätzen und dem Steuerungsprogramm 10 dargestellt ist, und die in Figur 2a nicht dargestellte IO-Konfiguration.

Die physische Konfiguration erfolgt bei der in Figur 2a dargestellten Ausführungsvariante hingegen nicht mehr mittels des Engineeringsystems 100. Es ist stattdessen vorgesehen, ein Konfigurationsprogramm bevorzugt mittels des Engineeringsystems 100 zu entwerfen bzw. zu erstellen, welches Programmcode umfasst, mit dem eine Vorrichtung 200 programmierbar ist, Netzteilnehmer wie die Geräte A bis E, hinsichtlich des Datenaustausch über das Netz zu konfigurieren und hierfür unter Ansprechen auf wenigstens eine von einer Bedienperson angegebene konfigurationsrelevante Information eine Menge von erforderlichen Konfigurationsdaten zu generieren und zumindest eine Teilmenge der generierten Konfigurationsdaten über das Netz an einen zu konfigurierenden Teilnehmer zu übertragen, wobei zur Konfiguration hinsichtlich physischer Aspekte die von der Vorrichtung 200 generierte Menge von Konfigurationsdaten zweckmäßiger Weise eine Soll-Topologie umfasst.

Wie aus der Figur 2a zu erkennen ist, handelt es sich bei der Vorrichtung 200 in diesem Beispiel um eine Steuerung, so dass hier die Vorrichtung 200 gleichzeitig auch die Steuerung S ist. Aus diesem Grund umfasst das mittels des Engineeringssystems 100 erstellte Steuerungsprogramm 10 neben einer Menge von Programmcode für die Gerätesteuerung mit entsprechenden Prozessvariablen und/oder Adressen 11 auch einen zusätzlichen Programmabschnitt 13 welcher Programmcode, bevorzugt unter Einbindung wenigstens eines Funktionsbausteins, für die physische Konfiguration von Geräten bzw. Netzteilnehmern enthält. Derartige Funktionsbausteine oder ähnliche bzw. andere Mechanismen können auch in ein eigenständiges Konfigurationsprogramm eingebunden sein, vor allem dann, wenn die Vorrichtung 200 separat von der Steuerung S ausgeführt ist, was anwendungsspezifisch erfindungsgemäß ebenfalls vorgesehen sein kann.

Funktionsbausteine zum Hinzufügen und Verbinden von Teilnehmern anhand deren jeweiliger eindeutiger Geräte- und Portbezeichnung zur Generierung einer Soll-Topologie sehen zum Beispiel wie folgt aus:

| |
|---|
| FB_AddDevice(IN: DeviceID) |
| |
| FB_AddConnecton(IN: DeviceID, PortID, PartnerDeviceID, PartnerPortID) return ErrorCode |

Erfindungsgemäß kann daher bei dieser Ausführungsvariante bereits die Übertragung der Konfigurationsdaten einschließlich der Geräteliste 20 und des Steuerungsprogramms 10 samt des Programmabschnitts 13 an die Vorrichtung 200, welche in diesem Fall gleichzeitig auch die Steuerung S ist, erfolgen (in der Figur als Download bezeichnet), wobei das Engineeringsystem 100 zumindest vorübergehend mit der Vorrichtung 200 verbunden ist.

Somit ist es erfindungsgemäß bevorzugt vorgesehen, dass eine speicherprogrammierbare Steuerung derart programmiert ist, dass sie Teilnehmer eines Netzes, welche insbesondere Geräte einer Anlage oder Maschine sind, nicht nur steuern, sondern im Vorfeld der Betriebsphase, diese auch hinsichtlich des Datenaustauschs über das Netz konfigurieren kann, und also hierfür neben dem Programmcode eines Steuerprogramms auch Programmcode eines Konfigurationsprogramms ausführt.

Bei Ausführung des Steuerungsprogramms wird bevorzugter Weise zunächst der Programmabschnitt 13 und somit der Programmcode zur Konfiguration der Netzteilnehmer ausgeführt. Über eine Bedieneinheit, welche in der Figur nicht dargestellt ist, hat eine Bedienperson nun die Möglichkeit, auf einfache Weise konfigurationsrelevante Informationen anzugeben und mit Blick auf die gewünschte Netztopologie insbesondere welches Gerät über welchen Port mit einem anderen verschaltet ist. Dabei kann die Bedienperson auf die Informationen aus den Datensätzen der Geräteliste 20 zurückgreifen und braucht somit bevorzugter Weise nur noch die entsprechenden Geräte und Netzschnittstellen auswählen.

Unter Ansprechen auf diese Informationen, generiert die Vorrichtung 200 bzw. die Steuerung S zusätzlich zu den Konfigurationsdaten, welche ihr bezüglich logischer Aspekte des Datenaustauschs zwischen den Netzteilnehmern bereits vom Engineeringsystem 100 übermittelt wurden, weitere Konfigurationsdaten bezüglich der physischen Aspekte des Datenaustausch zwischen den Netzteilnehmern und insbesondere eine Soll-Topologie 40. Hierzu werden zweckmäßiger weise die Informationen aus den Datensätzen der Geräteliste 20 bezüglich der einzelnen Geräte A bis E und der Steuerung S und vor allem deren Netzschnittstellen herangezogen.

Zur Laufzeit sieht zum Beispiel ein Programmausschnitt zur Verknüpfung des Teilnehmer S und A bis E zur Generierung der Soll-Topologie 40, wobei die oben erwähnten Funktionsbausteine entsprechend oft genutzt werden, wie folgt aus:

| |
|---|
| ```
 /* Hinzufügen der Teilnehmer S und A bis E zur Soll-
 Topologie */
 FB_AddDevice("S");
 FB_AddDevice("A");
 FB_AddDevice("B");
 FB_AddDevice("C");
 FB_AddDevice("D");
 FB_AddDevice("E");
 
 /* Verschalten von Teilnehmer S mit Teilnehmer A */
 ErrorCode = FB_AddConnection("S", "1", "A", "1");
 If ErrorCode != OK /* Reaktion im Fehlerfall */;
 
 /* Verschalten von Teilnehmer A mit Teilnehmer B */
 ErrorCode = FB_AddConnection("A", "2", "B", "1");
 If ErrorCode != OK /* Reaktion im Fehlerfall */;
 
 /* Verschalten von Teilnehmer A mit Teilnehmer C */
 ErrorCode = FB_AddConnection("A", "3", "C", "1");
 If ErrorCode != OK /* Reaktion im Fehlerfall */;
 
 /* Verschalten von Teilnehmer B mit Teilnehmer D */
 ErrorCode = FB_AddConnection("B", "2", "D", "1");
 If ErrorCode != OK /* Reaktion im Fehlerfall */;
 
 /* Verschalten von Teilnehmer C mit Teilnehmer E */
 ErrorCode = FB_AddConnection("C", "3", "E", "1");
 If ErrorCode != OK /* Reaktion im Fehlerfall */;
 
 /* Verschalten von Teilnehmer D mit Teilnehmer E */
 ErrorCode = FB_AddConnection("D", "3", "E", "4");
 If ErrorCode != OK /* Reaktion im Fehlerfall */;
``` |

Im Fehlerfall würden entsprechende Diagnoseinformationen bereitstehen, die zum Beispiel über eine Maschine-Mensch-Schnittstelle wie eine mit der Vorrichtung 200 verbundene Bedieneinheit (nicht dargestellt) ausgegeben werden können.

Zweckmäßiger Weise ist die Vorrichtung 200 mit weiterem zusätzlichen Programmcode 14 derart programmiert, die generierte Soll-Topologie 40 auf Plausibilität in sich zu überprüfen. Überprüft wird dabei insbesondere, ob die zu verschaltenden Ports der Geräte zumindest gemäß der aus der Geräteliste 20 entnehmbaren Gerätebeschreibung vorhanden sind und vom gleichen Schnittstellentyp sind, und ob die Topologie ansonsten ebenfalls widerspruchsfrei ist. Für den Fehlerfall würden entsprechende Diagnoseinformationen bereitstehen, die zum Beispiel über eine Maschine-Mensch-Schnittstelle ausgegeben werden können. Ein derartiger Programmcode 14 könnte etwa wie folgt aussehen:

| |
|---|
| ```
 /* Prüfung der Soll-Topologie */
 ErrorCode = ValidateTopology();
 If ErrorCode != OK /* Reaktion im Fehlerfall */;
``` |

Bevorzugt ist die Vorrichtung 200 mit weiterem zusätzlichen Programmcode 15 derart programmiert, die generierte Soll-Topologie in Bezug auf die vorliegende Ist-Topologie 300 zu überprüfen, insbesondere dahingehend, ob die gemäß Soll-Topologie 40 zu verschaltenden Geräte in der Ist-Topologie 300 überhaupt vorhanden sind und ob die Geräteart und der Gerätetyp gemäß Soll und Ist übereinstimmt. Bevorzugt wird zudem geprüft, ob die eindeutigen Gerätebezeichnungen, wie sie gemäß Geräteliste 20 und Soll-Topologie 40 vorgesehen sind, mit denen der Geräte A bis E in der Ist-Topologie 300 übereinstimmen. Für den Fehlerfall würden entsprechende Diagnoseinformationen bereitstehen, die zum Beispiel über eine Maschine-Mensch-Schnittstelle ausgegeben werden können.

Da das Netz gemäß Ist-Topologie 300 als PROFINET IRT ausgeführt ist, ist die Vorrichtung 200 zweckmäßiger Weise mit weiterem zusätzlichen Programmcode 17 derart programmiert, dass sie die Funktionalität eines RTE-Planungsalgorithmusses zum Berechnen von RTE-Kommunikationsparametern, insbesondere im Hinblick auf die entsprechend zu reservierenden Größen der Zeitschlitze für die Datenübertragung, basierend auf der Geräteliste 20 und der in Figur 2a nicht dargestellten IO-Konfiguration sowie der generierten Soll-Topologie 40, bietet.

Ein Beispiel für derartigen Programmcode 17 könnte etwa wie folgt aussehen:

| |
|---|
| ```
 /* RTE-Planungsalgorithmus starten */
 CalculateCommunicationParameters();
``` |

Der Programmcode 14, 15 und 17 ist in Figur 2a als jeweils eigenständiges Konfigurationsprogramm dargestellt, alternativ könnten es aber auch zum Beispiel drei Programmabschnitte eines einzigen Konfigurationsprogramms oder aber des Steuerprogramms 10 sein, dies hängt insbesondere auch davon ab, ob es sich bei der Vorrichtung 200 um eine Steuerung oder eine von der Steuerung separate Vorrichtung handelt.

Schließlich werden dann die geplanten und generierten bzw. berechneten Konfigurationsdaten von der Vorrichtung 200 bzw. der Steuerung S an die weiteren Teilnehmer des Netzes gemäß Ist-Topologie 300, also an die Geräte A bis E übertragen (in der Figur als Download bezeichnet), wobei jeder Teilnehmer die für ihn relevante Teilmenge an Konfigurationsdaten erhält. Dies geschieht zum Beispiel aufgrund folgenden Programmcodes:

| |
|---|
| ```
 /* Netzwerk in Betrieb nehmen und generierte Konfiguration
 (Projektierung) auf Geräte laden */
 Activate Configuration();
``` |

Die Teilnehmer prüfen nach Erhalt der Konfigurationsdaten dann selbstständig, ob ihre direkten Nachbarteilnehmer gemäß Ist-Topologie 300 mit den gemäß Soll-Topologie geplanten Teilnehmern und Netzschnittstellen übereinstimmen.

Alternativ oder ergänzend hat die Bedienperson bei der Angabe der wenigstens einen konfigurationsrelevanten Information erfindungsgemäß die Möglichkeit, eine von der Vorrichtung 200 automatisch zumindest teilweise ermittelte und bevorzugt als sogenannte Online-Visualisierung der Anlage an der Bedieneinheit angezeigte Netztopologie als Soll-Topologie freizugeben. Die Vorrichtung 200 ist in diesem Fall entsprechend zur Generierung einer Soll-Topologie basierend auf aus dem Netz und den verbundenen Teilnehmern gemäß Ist-Topologie ausgelesenen Verschaltungsinformationen programmiert, wobei die ausgelesenen Verschaltungsinformationen bevorzugt eindeutige Bezeichnungen der Geräte und deren Schnittstellen umfassen.

Da eine Bedienperson erfindungsgemäß in den Konfigurationsprozess derart eingebunden ist, dass sie zumindest eine konfigurationsrelevante Information angeben muss, sei es dergestalt, dass sie mit Blick auf die gewünschte Netztopologie einfach über eine Bedieneinheit angibt, welches Gerät über welchen Port mit einem anderen verbunden ist, oder dass sie eine von der Vorrichtung 200 automatisch ermittelte Netztopologie als Soll-Topologie freigibt, bevor die von der Vorrichtung 200 generierte Menge an Konfigurationsdaten an die Netzteilnehmer übertragen und aktiviert, ist weiterhin die Sicherheit, die ein tatsächlicher Soll-Ist-Vergleich bietet, gewährleistet, ohne dass jedoch bei jeder Änderung an einer Anlage der erneute Einsatz eines Engineeringsystems erforderlich wäre, wobei grundsätzlich beliebige Soll-Topologien von der Vorrichtung 200 generierbar sind.

Die Figuren 2b und 2c zeigen ein Beispiel für die Konfiguration der Geräte einer zweiten erweiterten Anlagenvariante (Figur 2c) ausgehend von einer ersten Grundvariante der Anlage (Figur 2b) unter Anwendung der Ausführungsvariante der Erfindung gemäß Figur 2a.

Eine Anlage umfasst gemäß ihrer Grundvariante, wie sie die Figur 2b zeigt, neben einer Steuerung 200 noch die Geräte A, B und C, welche miteinander verbunden und somit Teilnehmer eines gemeinsamen Kommunikationsnetzes sind. Die kleinen Nummern neben den Teilnehmern stellen die eindeutige Bezeichnung ihrer jeweiligen Netzschnittstellen dar.

Neben dieser Grundvariante gibt es weitere Varianten, gemäß welcher die Anlage zum Beispiel weitere Geräte als optionale Zusatz-Komponenten umfassen kann, die ebenfalls als Teilnehmer in das Netz einzubinden sind, damit zu deren Steuerung ein Datenaustausch zumindest mit der Steuerung 200 möglich ist. So gibt es zum Beispiel eine Variante, bei der die Anlage noch ein Gerät für die Materialzufuhr umfasst, welches potentiell an verschiedenen Punkten im Netz angebunden werden kann.

Beim Aufbau der Anlage, werden die einzelnen Geräte entsprechend der Bestellung der Kunden und der Gegebenheiten vor Ort zusammengebaut. Dabei wird im Beispiel, wie es die Figur 2c zeigt, auch das Gerät für Materialzufuhr (Gerät X) hinzugefügt und über seinen Port 1 an den Port 3 von Gerät B angeschlossen. Dies ist an der durchgehenden Linie zwischen den Geräten X und B zu erkennen, während durch die gestrichelten Linien zwischen dem Gerät X und den Geräte A bzw. C die sonstigen Verbindungsmöglichkeiten angedeutet sind.

Die Steuerung (SPS) 200 gemäß Figur 2b und 2c ist gemäß der oben beschriebenen und in Figur 2a dargestellten Ausführungsvariante programmiert, einerseits die Geräte aller möglichen Varianten der Anlage steuern zu können, anderseits aber auch die Konfigurationsdaten generieren zu können, welche zur Konfiguration der jeweiligen Geräte hinsichtlich physischer Aspekte des Datenaustauschs zwischen den Geräten und der Steuerung erforderlich sind.

Demzufolge befindet sich auf der Steuerung 200 bereits, ohne dass dies in den Figuren 2b und 2c explizit dargestellt ist, neben dem entsprechenden Programmcode auch eine Geräteliste und die zur Konfiguration der Geräte hinsichtlich logischer Aspekte des Datenaustauschs erforderlichen Konfigurationsdaten und insbesondere IO-Zuordnung und IO-Konfiguration, wie oben bereits in Verbindung mit Figur 2a beschrieben.

Um die Geräte der in Figur 2c dargestellten Anlagenvariante auch hinsichtlich physischer Aspekte des Datenaustauschs konfigurieren zu können, benötigt die Steuerung 200 noch die Eingabe wenigstens einer konfigurationsrelevanten Information durch die Bedienperson. Letztere kann hierzu den mit der Steuerung 200 verbundenen Visualisierungsterminal 400 als Bedieneinheit nutzen, um anzugeben, dass nunmehr zusätzlich zur Grundvariante das Gerät X über seinen Port 1 mit dem Port 3 des Geräts B verbunden ist. Dabei kann die Bedienperson auf die Informationen aus den Datensätzen der Geräteliste zurückgreifen und braucht somit bevorzugter Weise nur noch die entsprechenden Geräte und Netzschnittstellen auswählen.

Der entsprechende Programmabschnitt zur anschließenden Verarbeitung der von der Bedienperson angegebenen konfigurationsrelevanten Informationen und Generierung einer entsprechenden Soll-Topologie könnte zur Laufzeit zum Beispiel wie folgt aussehen:

| |
|---|
| ```
 FB_AddDevice("SPS");
 FB_AddDevice("A");
 FB_AddDevice("B");
 FB_AddDevice("C");
 FB_AddDevice("X");
 FB_AddConnection("SPS", "1", "A", "2");
 FB_AddConnection("A", "1", "B", "2");
 FB_AddConnection("B", "1", "C", "2");
 FB_AddConnection("B", "3", "X", "1");
``` |

Des Weiteren erfolgt eine Plausibilitätsprüfung der generierten Soll-Topologie auf der Steuerung 200. Zudem erfolgt eine Prüfung der Soll-Topologie gegen die vorliegende Ist-Topologie. Für den Fehlerfall würden jeweils entsprechende Diagnoseinformationen bereitstehen, die zum Beispiel über den mit der Steuerung 200 verbundenen Visualisierungsterminal 400 ausgegeben werden können.

Weiterhin werden die notwendigen RTE-Kommunikationsparameter, zum Beispiel Sende- und Empfangszeitpunkte von Datentelegrammen, errechnet.

Schließlich werden die geplanten und generierten bzw. berechneten Konfigurationsdaten von der Steuerung 200 an die weiteren Teilnehmer des Netzes, also an die Geräte A, B, C und X übertragen, wobei jeder Teilnehmer die für ihn relevante Teilmenge an Konfigurationsdaten erhält.

Danach kann der Betrieb der Anlage in der erweiterten Variante gemäß Figur 2c aktiviert werden.

Die Figur 3a ist eine schematische Darstellung einer weiteren erfindungsgemäßen Ausführungsvariante zur Konfiguration von Teilnehmern eines Netzes, welche insbesondere Geräte einer industriellen Automatisierungsanlage sind.

Bei den zu konfigurierenden Netzteilnehmern handelt es sich um die Geräte A, B, C, D und E sowie die Steuerung S, welche zu einer bestimmten Variante einer in Figur 3a nicht näher gezeigten industriellen Anlage gehören und über ein Netz gemäß einer Ist-Topologie 300 verbunden sind, welches in diesem Fall wiederum als PROFINET IRT ausgeführt ist, so dass die Kommunikation zwischen den Netzteilnehmern zyklisch, echtzeitgebunden und taktsynchron erfolgt bzw. erfolgen soll. Die kleinen Nummern neben den Teilnehmern stellen die eindeutige Bezeichnung ihrer jeweiligen Netzschnittstellen dar.

Im Rahmen der Planung bzw. Projektierung einer Anlage mit zweckmäßiger Weise wenigstens einer Steuerung und einer Anzahl von Geräten, die als Teilnehmer eines Netzes per Datenaustausch in Kommunikation stehen, wird gemäß dieser Ausführungsvariante ein Engineeringsystem 100 im Wesentlichen nur noch zum Entwerfen bzw. Erstellen eines Steuer- bzw. Steuerungsprogramms 10 eingesetzt, mit dem eine Steuereinrichtung wie die Steuerung S programmierbar ist, Geräte wie die Geräte A bis E während des Betriebs der Anlage zu steuern. Das Steuerungsprogramm 10 umfasst hierzu entsprechenden Programmcode für zumindest jedes der Geräte A bis E, insbesondere aber auch bereits für weitere Geräte bzw. Gerätetypen oder -arten, die bei anderen Varianten der Anlage als der gemäß Figur 3a zum Einsatz kommen würden.

Aus der nachfolgenden detaillierten Beschreibung dieser erfindungsgemäßen Ausführungsvariante werden die Unterschiede gegenüber der zuvor anhand der Figuren 2a bis 2c beschriebenen Ausführungsvariante und die daraus resultieren zusätzlichen Vorteile deutlich.

Gemäß dieser weiteren erfindungsgemäßen Ausführungsvariante erfolgt zusätzlich zur physischen Konfiguration auch die logische Konfiguration nicht mehr mittels des Engineeringsystems 100. Vielmehr ist stattdessen vorgesehen, ein Konfigurationsprogramm bevorzugt mittels des Engineeringsystems 100 zu entwerfen bzw. zu erstellen, welches Programmcode umfasst, mit dem eine Vorrichtung 200 programmierbar ist, Netzteilnehmer wie die Geräte A bis E, hinsichtlich sowohl logischer als auch physischer Aspekte des Datenaustausch über das Netz zu konfigurieren und hierfür unter Ansprechen auf wenigstens eine von einer Bedienperson angegebene konfigurationsrelevante Information eine Menge von erforderlichen Konfigurationsdaten zu generieren und zumindest eine Teilmenge der generierten Konfigurationsdaten über das Netz an einen zu konfigurierenden Teilnehmer zu übertragen. Dabei kann die Vorrichtung 200 sowohl eine Geräteliste 20 als auch in Bezug auf die Konfiguration hinsichtlich logischer Aspekte entsprechende Konfigurationsdaten generieren, die insbesondere die IO-Zuordnungen und IO-Konfiguration definieren.

Wie aus der Figur 3a zu erkennen ist, handelt es sich bei der Vorrichtung 200 auch in diesem Beispiel um eine Steuerung, so dass hier die Vorrichtung 200 gleichzeitig auch die Steuerung S ist. Aus diesem Grund umfasst das mittels des Engineeringssystems 100 erstellte Steuerungsprogramm 10 neben einer Menge von Programmcode für die Gerätesteuerung mit entsprechenden Prozessvariablen und/oder Adressen 11 auch einen zusätzlichen Programmabschnitt 13 welcher Programmcode, bevorzugt unter Einbindung wenigstens eines Funktionsbausteins für die physische Konfiguration von Geräten bzw. Netzteilnehmern enthält, sowie einen weiteren zusätzlichen Programmabschnitt 12 welcher Programmcode, bevorzugt unter Einbindung wenigstens eines Funktionsbausteins für die logische Konfiguration von Geräten bzw. Netzteilnehmern. Derartige Funktionsbausteine oder ähnliche bzw. andere Mechanismen können aber auch in ein eigenständiges Konfigurationsprogramm eingebunden sein, vor allem dann, wenn die Vorrichtung 200 separat von der Steuerung S ausgeführt ist, was anwendungsspezifisch erfindungsgemäß ebenfalls vorgesehen sein kann.

Erfindungsgemäß kann daher bei dieser Ausführungsvariante bereits die Übertragung des Steuerungsprogramm 10 samt der Programmabschnitts 12 und 13 an die Vorrichtung 200, welche in diesem Fall gleichzeitig auch die Steuerung S ist, erfolgen (in der Figur als Download bezeichnet), wobei das Engineeringsystem 100 zumindest vorübergehend mit der Vorrichtung 200 verbunden ist.

Wie aus der Figur 3a ersichtlich ist, liegt auf der Vorrichtung 200 ein Gerätekatalog 50 (Repository) mit Einträgen für Gerätetypen vor, welche bevorzugt gegliedert nach Gerätearten wie Switch, IO oder Drive sind, wobei zu jedem Gerätetyp bereits eine Menge weiterer Beschreibungsdaten wie zum Beispiel der Herstellername vorhanden sind. Ein solcher Gerätekatalog 50 kann bevorzugt ebenfalls mittels eines Engineeringsystems 100 erstellt und dann an die Vorrichtung 200 übertragen worden sein.

Ein Funktionsbaustein zum Hinzufügen eines Datensatzes für ein bestimmtes Gerät zur Geräteliste, unter Nutzung der Beschreibungsdaten, die zu dem Gerätetyp dieses Geräts im Gerätekatalog hinterlegt sind, könnte zum Beispiel wie folgt aussehen:

| |
|---|
| FB_CreateLogDevice(IN: DeviceID, DeviceNature, DeviceType, VendorID) return ErrorCode |

Ein Funktionsbaustein zum Erstellen einer IO-Zuordnung zwischen einer Variable 11 des Steuerungsprogramms 10 und einer Prozessdatenadresse eines Gerätes, das in der Geräteliste 20 enthalten ist, könnte zum Beispiel wie folgt aussehen:

| |
|---|
| FB_CreateIOConnection(IN: VariableName, DeviceID, Adress) |

Bei Ausführung des Steuerungsprogramms wird bevorzugter Weise zunächst der Programmabschnitt 12 und somit der Programmcode für die logische Konfiguration der Netzteilnehmer ausgeführt.

Über eine Bedieneinheit, welche in der Figur nicht dargestellt ist, hat eine Bedienperson nun die Möglichkeit, auf einfache Weise konfigurationsrelevante Informationen anzugeben und mit Blick auf die gewünschte Netztopologie insbesondere welche Geräte darin vorkommen, damit eine Geräteliste 20 mit entsprechenden Gerätedatensätzen generiert werden kann. Dabei kann die Bedienperson auf die Informationen aus den Einträgen im Gerätekatalog 50 zurückgreifen und braucht somit bevorzugter Weise nur noch die entsprechenden Gerätetypen auswählen und eindeutige Gerätenamen anzugeben.

Unter Ansprechen auf diese Informationen, generiert die Vorrichtung 200 bzw. die Steuerung S die entsprechende Geräteliste 20. Hierzu werden zweckmäßiger Weise die im Gerätekatalog 50 enthaltenen Informationen bezüglich der Gerätetypen und weiteren Daten der einzelnen Geräte A bis E und der Steuerung S und vor allem deren Netzschnittstellen herangezogen.

Ein Programmabschnitt zur Generierung der Geräteliste 20 unter Nutzung des Gerätekatalogs 50 würde zum Hinzufügen eines Datensatzes für das Gerät "A" der Geräteart "Switch", des Gerätetyps "Typ 1" und des Herstellers "H1" sowie eines Datensatzes für das Gerät "B" der Geräteart "IO", des Gerätetyps "Typs 11" und des Herstellers "H2" sich zur Laufzeit zum Beispiel wie folgt darstellen, wobei die oben erwähnten Funktionsbausteine entsprechend oft genutzt werden:

| |
|---|
| ```
 /* Hinzufügen von Geräten zur Geräteliste */
 FB_CreateLogDevice("A", "Switch", "Typ 1", "H1");
 FB_CreateLogDevice("B", "IO", "Typ 11", "H2");
``` |

Entsprechend ähnlich würde der Programmcode für die für die weiteren Geräte C bis E der Ist-Topologie 300 aussehen.

Über die in der Figur nicht dargestellte Bedieneinheit hat die Bedienperson weiterhin die Möglichkeit, konfigurationsrelevante Informationen hinsichtlich der IO-Zuordnung anzugeben.

Ein Programmabschnitt zur Generierung entsprechender Verknüpfungen zwischen einer Variable 11 des Steuerungsprogramms 10 und einer Prozessdatenadresse eines Gerätes, das nunmehr in der Geräteliste 20 enthalten ist, könnte sich zur Laufzeit zum Beispiel wie folgt darstellen, wobei die oben erwähnten Funktionsbausteine entsprechend oft genutzt werden:

| |
|---|
| ```
 /* IO-Zuordnung */
 FB_CreateIOConnection("Variable1", "A", "Adresse 10.4");
 FB_CreateIOConnection("Variable2", "B", "Adresse 6.4");
``` |

Entsprechend ähnlich würde der Programmcode für die für die weiteren Geräte C bis E der Ist-Topologie 300 aussehen.

Ein Programmabschnitt zur Generierung weiterer Konfigurationsdaten, insbesondere hinsichtlich der IO-Konfiguration, unter Ansprechen auf entsprechende Angaben der Bedienperson etwa in Bezug auf Parameter wie Updatezeiten oder Timeouts für einzelne Geräte kann ebenfalls vorgesehen sein.

Möglich ist es auch, falls für ein Gerät kein passender Eintrag im Gerätekatalog 50 enthalten ist, dass alle erforderlichen Daten bzw. Parameter von der Bedienperson mittels der Bedieneinheit angegeben werden, wobei diese für eine spätere Verwendung auch im Gerätekatalog 50 hinterlegbar wären, oder dass alternativ auch ein erweiterter Gerätekatalog 50 auf die Vorrichtung 200 geladen werden kann.

Denkbar ist ferner, dass Angaben zu einem Gerät, sofern sie sich nicht dem Gerätekatalog 50 entnehmen lassen, aus dem jeweiligen Gerät durch die Vorrichtung 200 ausgelesen werden, wenn das Gerät bereits mit der Vorrichtung 200 verbunden ist.

Bevorzugt kann im Anschluss an die Konfiguration der logischen Elemente bzw. Aspekte die Konfiguration hinsichtlich der physischen Aspekte erfolgen, wobei hierzu der Programmabschnitt 13 und somit der Programmcode für die physische Konfiguration der Netzteilnehmer ausgeführt wird.

Bei der Generierung der physischen Konfigurationsdaten, welche im Wesentlichen wie bereits oben für die erste Ausführungsvariante beschrieben erfolgt, kann auf die nunmehr vorliegende Geräteliste 20 zurückgegriffen werden.

Wie aus der Figur 3a ferner ersichtlich ist, ist die Vorrichtung 200 zweckmäßiger Weise auch mit weiterem Programmcode 14 zur Plausibilitätsprüfung der generierten Soll-Topologie 40, mit Programmcode 15 zur Prüfung der Soll-Topologie 40 in Bezug auf die vorliegende Ist-Topologie 300 sowie mit Programmcode 17 zur Berechnung von RTE-Kommunikationsparametern programmiert, wobei diesbezüglich ebenfalls auf die vorstehenden Erläuterungen zur ersten Ausführungsvariante verwiesen wird.

Schließlich werden auch gemäß der Ausführungsvariante wie in Figur 3a gezeigt, die geplanten und generierten bzw. berechneten Konfigurationsdaten von der Vorrichtung 200 bzw. der Steuerung S an die weiteren Teilnehmer des Netzes gemäß Ist-Topologie 300, also an die Geräte A bis E übertragen (in der Figur als Download bezeichnet), wobei jeder Teilnehmer die für ihn relevante Teilmenge an Konfigurationsdaten erhält.

Bevorzugt ist die Vorrichtung 200 mit weiterem zusätzlichen Programmcode, welcher in der Figur nicht dargestellt ist, derart programmiert, dass sie die Funktionalität bietet, Gerätenamen und/oder sonstige Geräteidentifikationen, wie sie gemäß der Soll-Topologie 40 und der Geräteliste 20 vorgesehen sind, an Geräte A bis E der Ist-Topologie 300 zu vergeben (sogenannte Gerätetaufe), damit im späteren Betrieb der Anlage und des Netzes eine eineindeutige Identifizierung der Geräte sichergestellt ist, wobei von der Vorrichtung 200 bzw. der Steuerung S die "zu taufenden" Geräte der Ist-Topologie zunächst anhand der mit ihnen jeweils verbundenen Nachbargeräte und gegebenenfalls anhand der jeweiligen Geräteart und/oder des Gerätetyps ermittelt werden. Für den Fehlerfall, also beispielsweise wenn eine Gerät in der Ist-Topologie nicht ermittelt werden kann, stehen entsprechende Diagnoseinformationen bereit, auf die dann entsprechend reagiert werden.

Die Figuren 3b und 3c zeigen ein Beispiel für die Konfiguration der Geräte einer Anlage unter Anwendung der Ausführungsvariante der Erfindung gemäß Figur 3a, nachdem ein Gerät eines ersten Typs (Figur 3b) durch ein Gerät eines zweiten Typs (Figur 3c) ersetzt wurde.

Eine Maschine oder Anlage kann eine Vielzahl von miteinander in Verbindung stehenden Geräten umfassen. Das Beispiel geht vom Betrieb einer Windkraftanlage aus, in der neben einer Steuerung 200 (SPS) und den Geräte A und B auch noch ein Frequenzumrichter vom Typ 1 verwendet wird, welcher in Figur 3b als Gerät X1 dargestellt ist, wobei die Geräte A, B, X1 und die Steuerung 200 miteinander verbunden und somit Teilnehmer eines gemeinsamen Kommunikationsnetzes sind. Die kleinen Nummern neben den Teilnehmern stellen die eindeutige Bezeichnung ihrer jeweiligen Netzschnittstelle dar.

Fällt eine Komponente aus, so kann sie nicht immer durch eine baugleiche Komponente ersetzt werden. Da Maschinen und Anlagen oft über viele Jahrzehnte im Einsatz sind, kann man im Moment der Anlagenerstellung noch nicht wissen, welche Ersatzkomponenten einmal zum Einsatz kommen werden. So soll nach einem Ausfall des Frequenzumrichters vom Typ 1 dieser durch einen Frequenzumrichter vom Typ 2, wie er in Figur 3c zu sehen ist, ersetzt werden, welcher zwar grundsätzlich die gleiche Funktion erfüllt, jedoch eine andere Identifizierung, insbesondere einen anderen Gerätenamen, Gerätetyp und Gerätehersteller hat sowie eine andere Reihenfolge der Prozessdaten besitzt. Die Konfiguration und Integration dieser Ersatzkomponente anderen Typs ist erfindungsgemäß jedoch auf einfache und sichere Weise möglich.

Die Steuerung (SPS) 200 gemäß Figur 3b und 3c ist gemäß der oben beschriebenen und in Figur 3a dargestellten Ausführungsvariante programmiert, einerseits die Geräte aller möglichen Varianten der Anlage steuern zu können, anderseits aber auch die Konfigurationsdaten generieren zu können, welche zur Konfiguration der jeweiligen Geräte hinsichtlich sowohl logischer als physischer Aspekte des Datenaustauschs zwischen den Geräten und der Steuerung erforderlich sind.

Demzufolge befindet sich auf der Steuerung 200 bereits, ohne dass dies in den Figuren 3b und 3c explizit dargestellt ist, neben dem entsprechenden Programmcode auch ein Gerätekatalog, wie oben bereits in Verbindung mit Figur 3a beschrieben.

Um die in Figur 3c dargestellten Geräte der Anlage und insbesondere das Gerät X2 hinsichtlich logischer Aspekte des Datenaustauschs konfigurieren zu können, benötigt die Steuerung 200 die Eingabe konfigurationsrelevanter Informationen durch die Bedienperson. Letztere kann hierzu den mit der Steuerung 200 verbundenen Visualisierungsterminal 400 als Bedieneinheit nutzen, um anzugeben, dass sich nunmehr das Gerät X2 in der Anlage befindet, wobei die Bedienperson auf die im Gerätekatalog zum Gerätetyp des Geräts X2 enthaltenen Beschreibungsdaten zurückgreifen kann und somit bevorzugter Weise nur noch den eindeutigen Gerätenamen anzugeben braucht, damit zunächst ein unter Ansprechen auf diese Informationen von der Steuerung 200 generierter Gerätedatensatz für das Gerät X2 in die Geräteliste eingefügt werden kann.

Der entsprechende Programmabschnitt zum Generieren und Hinzufügen eines Gerätedatensatzes für das Gerät "X2", der Geräteart "Frequenzumrichter", des Gerätetyps "Typ 2" und des Herstellers "HS 23" mit einer Updatezeit von "1 ms" könnte zur Laufzeit zum Beispiel wie folgt aussehen:

| |
|---|
| FB_CreateLogDevice("X2", "Frequenzumrichter", "Typ 2", "HS 23", "1 ms"); |

Die Bedienperson kann den mit der Steuerung 200 verbundenen Visualisierungsterminal 400 ferner nutzen, um Informationen hinsichtlich der IO-Zuordnung anzugeben, da das Gerät X2 eine andere Beschaltung der Prozess- bzw. IO-Daten aufweist.

Ein Programmabschnitt zur Generierung entsprechender Verknüpfungen zwischen einer Variable "SollDrehzahl" des Steuerungsprogramms 10 und einer Prozessdatenadresse des Geräts X2, das nunmehr in der Geräteliste enthalten ist, könnte sich zur Laufzeit zum Beispiel wie folgt darstellen:

| |
|---|
| FB_CreateIOConnection("SollDrehzahl", "X2", "Adresse 8.2"); |

Um die in Figur 3c dargestellten Geräte der Anlage auch hinsichtlich physischer Aspekte des Datenaustauschs konfigurieren zu können, ist der Steuerung 200 noch anzugeben, dass nunmehr anstelle des Geräts X1 das Gerät X2 mit seinem Port 2 mit dem Port 1 des Geräts B verbunden ist. Hierzu können zum einen der Visualisierungsterminal 400 und zum anderen die Informationen aus den Datensätzen der Geräteliste genutzt werden, so dass die Bedienperson bevorzugter Weise nur noch die entsprechenden Geräte und Netzschnittstellen auszuwählen braucht.

Der entsprechende Programmabschnitt zur anschließenden Verarbeitung der von der Bedienperson angegebenen konfigurationsrelevanten Informationen und Generierung einer entsprechenden Soll-Topologie könnte zur Laufzeit zum Beispiel wie folgt aussehen:

| |
|---|
| FB_AddDevice("SPS"); |
| FB_AddDevice("A"); |
| FB_AddDevice("B"); |
| FB_AddDevice("X2"); |
| FB_AddConnection("SPS", "1", "A", "2"); |
| FB_AddConnection("A", "1", "B", "2"); |
| FB_AddConnection("B", "1", "X2", "2"); |

Des Weiteren erfolgt eine Plausibilitätsprüfung der generierten Soll-Topologie auf der Steuerung 200. Zudem erfolgt eine Prüfung der Soll-Topologie gegen die vorliegende Ist-Topologie. Für den Fehlerfall würden jeweils entsprechende Diagnoseinformationen bereitstehen, die zum Beispiel über den mit der Steuerung 200 verbundenen Visualisierungsterminal 400 ausgegeben werden können.

Weiterhin werden die notwendigen RTE-Kommunikationsparameter, zum Beispiel Sende- und Empfangszeitpunkte von Datentelegrammen, durch die Steuerung 200 errechnet.

Schließlich werden die geplanten und generierten bzw. berechneten Konfigurationsdaten von der Steuerung 200 an die weiteren Teilnehmer des Netzes, also an die Geräte A, B und X2 übertragen, wobei jeder Teilnehmer die für ihn relevante Teilmenge an Konfigurationsdaten erhält.

Danach kann der Betrieb der Anlage mit den Geräten gemäß Figur 3c aktiviert werden.

Figur 4 zeigt schließlich den topologischen Aufbau einer erfindungsgemäßen Netzwerkstruktur. Die Netzteilnehmer A bis J sind dabei gemäß der Sollvorgabe aus dem Engineeringsystem angeordnet, beispielsweise befinden sich in Figur 4 die Netzteilnehmer A bis I in einer Ringtopologiestruktur. Die Längen der Leitungen L1 bis L11 sind bevorzugt vorgegeben und werden zu Zwecken der Zeitsynchronisation in den jeweils benachbarten Netzteilnehmern gespeichert. Es können sich zwischen zwei Netzteilnehmern eine Netzwerkleitung befinden, wie beispielsweise gezeigt zwischen den Netzteilnehmern B und C über L2, es können aber auch mehrere Netzverbindungsleitungen angeschlossen werden, wie in Figur 4 gezeigt zwischen den Netzteilnehmern C und D über die Leitungen L3 und L4.

Erfindungsgemäß sind die Netzteilnehmer, beispielsweise die A bis J in der Figur 4, mit einer Ausrüstung versehen, die erlaubt, dass jedes Gerät selbst die geplanten, durch das Engineeringsystem vorgegebenen (Soll-)Nachbargeräte sowie die dort möglicherweise ebenfalls vorgegebenen (Soll-)Netzwerkschnittstellen mit den vorhandenen und verwendeten (Ist-)Nachbargeräten und den entsprechenden (Ist-)Netzwerkschnittstellen vergleicht. Die Ausrüstung vergleicht nun die vorhandenen (Soll-)Nachbargeräte mit den im Engineeringsystem vorgegebenen (Soll-)Nachbargeräten. Durch die erfindungsgemäße Ausrüstung wird nun ein Anlaufen oder Betrieb des Netzwerks auch dann ermöglicht, wenn die installierten (Ist-)Nachbargeräte nicht an den möglicherweise vorgegebenen (Soll-)Netzwerkschnittstellen der Netzteilnehmer angeschlossen sind. Ein Betrieb des Netzwerkes wird jedoch verhindert, wenn die (Soll-) Nachbargeräte nicht mit den installierten (Ist-) Nachbargeräten identisch sind.

Für die Verwendung und/oder den Einbau der erfindungsgemäßen Ausrüstung in einem herkömmlichen Netzwerk, was beispielsweise nach dem PROFInet-IRT-Standard aufgebaut ist, muss hierbei weder der PROFInet-Standard erweitert werden, noch müssen Engineeringsysteme abgeändert werden. Die Handhabung während der Installation oder bei Wartung und Gerätetausch wird durch die erfindungsgemäße Ausrüstung damit vereinfacht.

Bei der Planung einer Solltopologie von neu aufzubauenden Netzwerken kann darüber hinaus bereits im Engineeringsystem auf eine exakte Sollanordnung der Netzwerkschnittstellen verzichtet werden. Es wird lediglich verzeichnet, welche Geräte mit entsprechenden Nachbargeräten verbunden sein werden, beispielsweise werden in der beispielhaften Anordnung gemäß Figur 4 die Geräte E und H als Nachbargeräte zu Gerät G vordefiniert. Vorzugsweise werden die Leitungslängen der Verbindungsleitungen L8 und L9 ebenfalls vorgegeben, lediglich die Verbindung mittels der Netzwerkschnittstellen 1 oder 2 des Netzteilnehmers G wird nicht festgelegt. Der Netzteilnehmer E wird also den Betrieb des Netzes nicht stören, wenn er an Schnittstelle 1 angeschlossen wird, obwohl er für Schnittstelle 2 vorgesehen sein könnte. Wie im Falle der Netzteilnehmer C und D kann auch eine Anzahl an Leitungsverbindungen zwischen den Netzteilnehmern vorgegeben werden, es ist jedoch gleich, ob die Leitung L4 beispielsweise am Netzteilnehmer C über eine der Schnittstellen 1 bis 4 mit dem Gerät D verbunden ist. Ebenfalls ist es denkbar, dass die Leitung L3 von Schnittstelle 2 oder 3 des Netzteilnehmers D aus mit einer der Netzwerkschnittstellen 1 bis 4 des Netzteilnehmers C verbunden ist. Die erfindungsgemäße Freiheit der Schnittstellenwahl vereinfacht die Handhabung während der Installation oder bei Wartung und Gerätetausch damit gegenüber einer herkömmlichen Verbindung gemäß dem PROFInet-IRT-Standards deutlich.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne die Erfindung zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

## Patentansprüche

1. Portunabhängiges topologisch geplantes Echtzeitnetzwerk mit einer Sollkonfiguration (40) der Netzwerktopologie zur Verwendung in industriellen Netzwerken zur Übertragung von zeitkritischen Daten in (Prozess-) Automatisierungsanlagen mit zumindest einem ersten (J) und einem weiteren Netzteilnehmer (B, C, D, E, F, G, H, I) mit jeweils zumindest einer Netzwerkschnittstelle (1, 2, 3, 4) zur Verbindung des ersten und des weiteren Netzteilnehmers mit dem industriellen Netzwerk, so dass der erste und der weitere Netzteilnehmer Teilnehmer des gemeinsamen Echtzeitnetzwerkes sind,
**dadurch gekennzeichnet, dass**
für den ersten und den weiteren Netzteilnehmer mit der Sollkonfiguration der Netzwerktopologie lediglich eine Sollvorgabe der Benachbarung zumindest des ersten und des weiteren Netzteilnehmers definiert ist, der erste und der weitere Netzteilnehmer selbsttätig eine Überprüfung der geplanten Soll-Nachbargeräte mit den installierten Ist-Nachbargeräten anhand der Sollkonfiguration der Netzwerktopologie durchführt und bei Übereinstimmung der Benachbarung die Anwendung der Kommunikationsparameter auf die zumindest eine Netzwerkschnittstelle des ersten beziehungsweise des weiteren Netzteilnehmers bestimmt und
dass die Überprüfung durch den ersten und den weiteren Netzteilnehmer bei Übereinstimmung der Benachbarung die Netzwerkwerkverbindung zwischen benachbarten Netzteilnehmern freigibt.

2. Portunabhängiges topologisch geplantes Echtzeitnetzwerk nach Anspruch 1, mit Mitteln zum Konfigurieren wenigstens des ersten Netzteilnehmers (J) hinsichtlich des Datenaustauschs über das Netz gemäß eines Soll-Zustands, wobei der erste Netzteilnehmer über das Netz mit einer Vorrichtung (200) verbunden wird, die derart programmiert ist, dass sie unter Ansprechen auf wenigstens eine von einer Bedienperson angegebene konfigurationsrelevante Information eine Menge von für das Konfigurieren zumindest des ersten Netzteilnehmers erforderlichen Konfigurationsdaten generiert und zumindest eine Teilmenge dieser generierten Menge von Konfigurationsdaten an den ersten Netzteilnehmer über das Netz übermittelt.

3. Portunabhängiges topologisch geplantes Echtzeitnetzwerk nach Anspruch 2
wobei die Vorrichtung (200) Mittel zur Datenverarbeitung und zum Ausführen von Programmcode sowie Mittel zum Datenaustausch mit dem weiteren Netzteilnehmer (B, C, D, E, F, G, H, I), mit dem die Vorrichtung über das Netz verbunden ist, umfasst, wobei die Vorrichtung programmiert ist, zumindest den weiteren Netzteilnehmer hinsichtlich des Datenaustauschs über das Netz gemäß eines Soll-Zustands zu konfigurieren und
wobei die Vorrichtung unter Ansprechen auf wenigstens eine von einer Bedienperson angegebene konfigurationsrelevante Information eine Menge von für das Konfigurieren zumindest des weiteren Netzteilnehmers erforderlichen Konfigurationsdaten generiert und zumindest eine Teilmenge dieser generierten Menge von Konfigurationsdaten an den weiteren Netzteilnehmer über das Netz übermittelt.

4. Portunabhängiges topologisch geplantes Echtzeitnetzwerk nach Anspruch 3,
wobei die wenigstens eine konfigurationsrelevante Information mittels einer der Vorrichtung (200) zugeordneten Mensch-Maschine-Schnittstelle (400), insbesondere mittels einer mit der Vorrichtung verbundenen Bedieneinheit mit Ein- und Ausgabemitteln, von der Bedienperson angegeben wird.

5. Portunabhängiges topologisch geplantes Echtzeitnetzwerk nach einem der Ansprüche 3 oder 4,
wobei die Vorrichtung (200) programmiert ist, zumindest den weiteren Netzteilnehmer (B, C, D, E, F, G, H, I) hinsichtlich logischer und/oder physischer Aspekte des Datenaustauschs über das Netz zu konfigurieren.

6. Portunabhängiges topologisch geplantes Echtzeitnetzwerk nach Anspruch 5,
wobei die Menge der generierten und für das Konfigurieren zumindest des weiteren Netzteilnehmers (B, C, D, E, F, G, H, I) hinsichtlich physischer Aspekte erforderlichen Konfigurationsdaten die Sollkonfiguration (40) der Netzwerktopologie für das Netz umfasst.

7. Portunabhängiges topologisch geplantes Echtzeitnetzwerk nach einem der Ansprüche 3 bis 6,
wobei die Mittel zum Datenaustausch für einen zyklischen Datenaustausch über das Netz ausgebildet sind.

8. Portunabhängiges topologisch geplantes Echtzeitnetzwerk nach einem der Ansprüche 3 bis 7,
wobei die Mittel zum Datenaustausch für einen echtzeitgebundenen Datenaustausch über das Netz ausgebildet sind und die Vorrichtung insbesondere programmiert ist, zumindest den weiteren Netzteilnehmer (B, C, D, E, F, G, H, I) hinsichtlich eines echtzeitgebundenen Datenaustauschs über das Netz zu konfigurieren.

9. Portunabhängiges topologisch geplantes Echtzeitnetzwerk nach einem der Ansprüche 3 bis 8,
wobei die Mittel zum Datenaustausch für einen taktsynchronen Datenaustausch über das Netz ausgebildet sind und die Vorrichtung (200) programmiert ist, zumindest den weiteren Netzteilnehmer (B, C, D, E, F, G, H, I) hinsichtlich eines taktsynchronen Datenaustauschs über das Netz zu konfigurieren.

10. Portunabhängiges topologisch geplantes Echtzeitnetzwerk nach einem der Ansprüche 3 bis 9,
wobei die Mittel zum Datenaustausch für einen Datenaustausch über das Netz gemäß Profinet IRT-Spezifikation ausgebildet sind.

11. Portunabhängiges topologisch geplantes Echtzeitnetzwerk nach vorstehendem Anspruch,
wobei die Menge der generierten und für das Konfigurieren zumindest des weiteren Netzteilnehmers erforderlichen Konfigurationsdaten eine Menge von von der Vorrichtung (200) berechneten RTE-spezifischen Parametern umfasst.

12. Portunabhängiges topologisch geplantes Echtzeitnetzwerk nach vorstehendem Anspruch,
wobei die Vorrichtung (200) eine Menge von konfigurationsrelevanten Informationen aus dem Netz und/oder dem weiteren Netzteilnehmers (B, C, D, E, F, G, H, I) ausliest, basierend darauf die Menge von für das Konfigurieren zumindest des weiteren Netzteilnehmers erforderlichen Konfigurationsdaten generiert und unter Ansprechen auf wenigstens eine von der Bedienperson angegebene konfigurationsrelevante Information zumindest eine Teilmenge dieser generierten Menge von Konfigurationsdaten an den weiteren Netzteilnehmer über das Netz übermittelt.

13. Portunabhängiges topologisch geplantes Echtzeitnetzwerk nach einem der Ansprüche 11 oder 12,
wobei die Vorrichtung (200) die Menge der generierten und für das Konfigurieren zumindest des weiteren Netzteilnehmers (B, C, D, E, F, G, H, I) erforderlichen Konfigurationsdaten zunächst auf Plausibilität in sich überprüft, bevor sie zumindest eine Teilmenge dieser generierten Menge von Konfigurationsdaten an den weiteren Netzteilnehmer über das Netz übermittelt.

14. Portunabhängiges topologisch geplantes Echtzeitnetzwerk nach einem der Ansprüche 11 bis 13,
wobei die Vorrichtung (200) die Menge der generierten und für das Konfigurieren zumindest des weiteren Netzteilnehmers (B, C, D, E, F, G, H, I) erforderlichen Konfigurationsdaten zunächst auf Plausibilität hinsichtlich des Ist-Zustands des Netzes und zumindest des weiteren Netzteilnehmers überprüft,
bevor sie zumindest eine Teilmenge dieser generierten Menge von Konfigurationsdaten an den weiteren Netzteilnehmer über das Netz übermittelt.

15. Portunabhängiges topologisch geplantes Echtzeitnetzwerk nach einem der Ansprüche 11 bis 14, wobei die Vorrichtung (200) programmiert ist, sich selbst mittels zumindest einer Teilmenge der generierten Menge von Konfigurationsdaten hinsichtlich des Datenaustauschs über das Netz zu konfigurieren.

16. Portunabhängiges topologisch geplantes Echtzeitnetzwerk nach einem der Ansprüche 11 bis 15, wobei die Vorrichtung (200) programmiert ist, nach dem Konfigurieren den weiteren Netzteilnehmer (B, C, D, E, F, G, H, I) zu steuern, und
wobei die Vorrichtung insbesondere eine speicherprogrammierbare Steuerung ist.

17. Datenträger mit einem darauf gespeicherten Programmcode zur Programmierung einer Vorrichtung (200), welche unter Ansprechen auf wenigstens eine von einer Bedienperson angegebene konfigurationsrelevante Information eine Menge von für das Konfigurieren zumindest des ersten Netzteilnehmers erforderlichen Konfigurationsdaten generiert und zumindest eine Teilmenge dieser generierten Menge von Konfigurationsdaten an den ersten Netzteilnehmer über das Netze übermittelt,
wobei der Programmcode
- für zumindest einen ersten (J) und einen weiteren (B, C, D, E, F, G, H, I) Netzteilnehmer eine Teilnehmer- bzw. Geräteliste (20, 50) mit jeweils einem Gerätedatensatz für den jeweiligen Netzteilnehmer umfasst, wobei der Gerätedatensatz eine Menge von Informationen umfasst, die den jeweiligen Netzteilnehmer beschreiben,
- Funktionsbausteine zum Hinzufügen und Verbinden des ersten und des weiteren Netzteilnehmers und
- Programmcode eines Konfigurationsprogramms zur Konfiguration des ersten und des weiteren Netzteilnehmers umfasst, derart
dass der erste und der weitere Netzteilnehmer selbsttätig eine Überprüfung von geplanten Soll-Nachbargeräten mit installierten Ist-Nachbargeräten anhand einer Sollkonfiguration der Netzwerktopologie durchführt und bei Übereinstimmung der Benachbarung die Anwendung von Kommunikationsparametern auf zumindest eine Netzwerkschnittstelle des ersten beziehungsweise des weiteren Netzteilnehmers bestimmt und
dass die Überprüfung durch den ersten und den weiteren Netzteilnehmer bei Übereinstimmung der Benachbarung die Netzwerkverbindung zwischen benachbarten Netzteilnehmern freigibt.

## Claims

1. Port-independent topologically planned real time network with a target configuration (40) of the network topology for use in industrial networks for transmitting time-critical data in (process) automation plants comprising at least a first (J) and a further network subscriber (B, C, D, E, F, G, H, I), each having at least one network interface for connecting the first and the further network subscriber with the industrial network and thus the first and the further network subscriber are subscribers of the joint real time network,
**characterized in**
**that** for the first and the further network subscriber with the target configuration (40) of the network topology only a target specification for the neighborhood of at least the first and the further network subscriber is defined,
the first and the further network subscriber automatically check the planned target neighbor devices with installed actual neighbor devices, with the check being based on the target configuration of the network topology and the neighborhood being in correspondency, determines the application of the communication parameters to the at least one network interface of the first and/or the further network subscriber and that the check by the first and the further network subscriber enables the network connection between adjacent network subscribers, if the check shows the correspondency of the neighborhood.

2. Port-independent topologically planned real time network according to claim 1, comprising means for configuring, according to a target state, at least the first (J) network subscriber with regard to the data exchange via the network, wherein the first network subscriber is connected via the network to an apparatus (200) which is programmed in such a manner that said apparatus, in response to at least one configuration-relevant information provided by an operator, generates a set of configuration data required for configuring at least the first network subscriber, and transmits at least a subset of this generated set of configuration data via the network to the first subscriber.

3. Port-independent topologically planned real time network according to claim 2, wherein the apparatus (200) comprises means for data processing and for executing program codes as well as means for a data exchange with the further network subscriber (B, C, D, E, F, G, H, I) to which the apparatus is connected via the network,
wherein the apparatus is programmed so as to configure, according to a target state, the further network subscriber with regard to the data exchange via the network, and
wherein the apparatus, in response to at least one configuration-relevant information provided by an operator, generates a set of configuration data required for configuring the further network subscriber and transmits at least a subset of this generated set of configuration data via the network to the at least one further subscriber.

4. Port-independent topologically planned real time network according to claim 3, wherein the at least one configuration-relevant information is provided by the operator by means of a man-machine interface (400) allocated to the apparatus (200), in particular by means of an operating unit which is connected to the apparatus and has input and output means.

5. Port-independent topologically planned real time network according to claim 3 or claim 4,
wherein the apparatus (200) is programmed so as to configure the further network subscriber (B, C, D, E, F, G, H, I) with regard to logical and/or physical aspects of the data exchange via the network.

6. Port-independent topologically planned real time network according to claim 5,
wherein the set of configuration data generated and required for configuring the further network subscriber (B, C, D, E, F, G, H, I) with regard to physical aspects comprises a target configuration (40) of the network topology for the network.

7. Port-independent topologically planned real time network according to any one of the claims 3 to 6,
wherein the means for the data exchange are formed for a cyclical data exchange via the network.

8. Port-independent topologically planned real time network according to any one of the claims 3 to 7,
wherein the means for the data exchange are formed for a real-time-bound data exchange via the network and the apparatus is in particular programmed so as to configure the further network subscriber (B, C, D, E, F, G, H, I) with regard to a real-time-bound data exchange via the network

9. Port-independent topologically planned real time network according to any one of the claims 3 to 8,
wherein the means for data exchange are formed for a clock-synchronous data exchange via the network and the apparatus is programmed so as to configure the further network subscriber (B, C, D, E, F, G, H, I) with regard to a clock-synchronous data exchange via the network

10. Port-independent topologically planned real time network according to any one of the claims 3 to 9,
wherein the means for the data exchange are formed for a data exchange via the network according to the Profinet IRT specification.

11. Port-independent topologically planned real time network according to the preceding claim,
wherein the set of configuration data generated and required for configuring the further network subscriber comprises a set of RTE-specific parameters calculated by the apparatus (200).

12. Fort-independent topologically planned real time network according to the preceding claim,
wherein the apparatus (200) reads out a set of configuration-relevant information from the network and/or the further network subscriber (B, C, D, E, F, G, H, I) and, based thereon, generates the set of configuration data required for configuring the further network subscriber, and in response to at least one configuration-relevant information provided by the operator, transmits at least a subset of this generated set of configuration data, via the network to the further network subscriber,

13. Port-independent topologically planned real time network according to claim 11 or claim 12,
wherein the apparatus (200) first checks the set of configuration data generated and required for configuring at least the further network subscriber (B, C, D, E, F, G, H, I) for plausibility in itself before the apparatus transmits at least a subset of this generated set of configuration data via the network to the further network subscriber.

14. Port-independent topologically planned real time network according to any one of the claims 11 to 13,
wherein the apparatus (200) first checks the set of configuration data generated and required for configuring at least the further network subscriber (B, C, D, E, F, G, H, I) for plausibility with regard to the actual state of the network and at least of the at least one further subscriber before the apparatus transmits at least a subset of this generated set of configuration data via the network to the further network subscriber.

15. Port-independent topologically planned real time network according to any one of the claims 11 to 14,
wherein the apparatus (200) is programmed so as to configure itself, with regard to the data exchange via the network, by means of at least a subset of the generated set of configuration data.

16. Port-independent topologically planned real time network according to any one of the claims 11 to 15,
wherein the apparatus (200) is programmed so as to control the further network subscriber (B, C, D, E, F, G, H, I) after the configuration, and
wherein the apparatus is in particular a programmable logic controller.

17. A data carrier comprising a program code for programming an apparatus (200) stored thereon,
which in response to at least one configuration-relevant information provided by an operator generates a set of configuration data required for configuring the first network subscriber and transmits at least a subset of this generated set of configuration data, via the network to the first network subscriber,
wherein the program code comprises
- for at least a first and a further (B, C, D, E, F, G, H, I) network subscriber a subscriber or device list (20, 50) which contains a device data set for the respective network subscriber, each device data set comprising a set of information which describes the respective network subscriber,
- functional building blocks for adding and connecting the first and the further network subscriber and
- program code of a configuration program for configuration the first and the further network subscriber,
in such a manner, that
the first and the further network subscriber automatically check planned target neighbor devices with installed actual neighbor devices, with the check being based on the target configuration of the network topology and the neighborhood being in correspondency, determines the application of the communication parameters to the at least one network interface of the first and/or the further network subscriber and that the check by the first and the further network subscriber enables the network connection between adjacent network subscribers, if the check shows the correspondency of the neighborhood.

## Revendications

1. Réseau en temps réel planifié de manière topologique et indépendant du port présentant une configuration théorique (40) de la topologie de réseau destiné à être utilisé dans des réseaux industriels pour la transmission de données dépendantes du temps dans des installations d'automatisation (de processus), comprenant au moins un premier (J) et un autre abonné du réseau (B, C, D, E, F, G, H, I) pourvu chacun d'au moins une interface réseau (1, 2, 3, 4) permettant de relier le premier et l'autre abonné du réseau au réseau industriel, de sorte que le premier et l'autre abonné du réseau sont des abonnés du réseau en temps réel commun,
**caractérisé en ce que** :
pour le premier et l'autre abonné du réseau présentant la configuration théorique de la topologie de réseau, seule une valeur de consigne du voisinage au moins du premier et de l'autre abonné du réseau est définie,
le premier et l'autre abonné du réseau effectuent automatiquement un contrôle des appareils voisins théoriques planifiés avec les appareils voisins réels installés sur la base de la configuration théorique de la topologie de réseau et, lorsque le voisinage concorde, l'application des paramètres de communication sur ladite au moins une interface réseau du premier ou de l'autre abonné du réseau est décidée, et
**en ce que** le contrôle par le premier et l'autre abonné, lorsque le voisinage concorde, libère la liaison de réseau entre des abonnés du réseau voisins.

2. Réseau en temps réel planifié de manière topologique et indépendant du port selon la revendication 1, comprenant des moyens destinés à configurer au moins le premier abonné du réseau (J) en ce qui concerne l'échange de données par l'intermédiaire du réseau conformément à un état théorique, dans lequel le premier abonné du réseau est relié par l'intermédiaire du réseau à un dispositif (200) qui est programmé de telle manière que, en réponse à au moins une information pertinente pour la configuration donnée par un utilisateur, il génère une quantité de données de configuration nécessaires pour la configuration au moins du premier abonné du réseau et transmet au moins une partie de cette quantité générée de données de configuration au premier abonné du réseau par l'intermédiaire du réseau.

3. Réseau en temps réel planifié de manière topologique et indépendant du port selon la revendication 2,
dans lequel le dispositif (200) comprend des moyens permettant le traitement de données et l'exécution d'un code de programme ainsi que des moyens permettant l'échange de données avec l'autre abonné du réseau (B, C, D, E, F, G, H, I), auquel le dispositif est relié par l'intermédiaire du réseau,
dans lequel le dispositif est programmé pour configurer au moins l'autre abonné du réseau en ce qui concerne l'échange de données par l'intermédiaire du réseau conformément à un état théorique, et
dans lequel le dispositif, en réponse à au moins une information pertinente pour la configuration donnée par un utilisateur, génère une quantité de données de configuration nécessaires pour la configuration au moins de l'autre abonné du réseau et transmet au moins une partie de cette quantité générée de données de configuration à l'autre abonné du réseau par l'intermédiaire du réseau.

4. Réseau en temps réel planifié de manière topologique et indépendant du port selon la revendication 3, dans lequel ladite au moins une information pertinente pour la configuration est donnée par l'utilisateur au moyen d'une interface homme-machine (400) associée au dispositif (200), en particulier au moyen d'une unité de commande reliée au dispositif et comprenant des moyens d'entrée et de sortie.

5. Réseau en temps réel planifié de manière topologique et indépendant du port selon l'une quelconque des revendications 3 et 4, dans lequel le dispositif (200) est programmé pour configurer au moins l'autre abonné du réseau (B, C, D, E, F, G, H, I) en ce qui concerne les aspects logiques et/ou physiques de l'échange de données par l'intermédiaire du réseau.

6. Réseau en temps réel planifié de manière topologique et indépendant du port selon la revendication 5, dans lequel la quantité de données de configuration générées et nécessaires pour la configuration au moins de l'autre abonné du réseau (B, C, D, E, F, G, H, I) en ce qui concerne les aspects physiques comporte la configuration théorique (40) de la topologie de réseau pour le réseau.

7. Réseau en temps réel planifié de manière topologique et indépendant du port selon l'une quelconque des revendications 3 à 6, dans lequel les moyens permettant l'échange de données sont conçus pour un échange de données cyclique par l'intermédiaire du réseau.

8. Réseau en temps réel planifié de manière topologique et indépendant du port selon l'une quelconque des revendications 3 à 7, dans lequel les moyens permettant l'échange de données sont conçus pour un échange de données en temps réel par l'intermédiaire du réseau et le dispositif est programmé en particulier pour configurer au moins l'autre abonné du réseau (B, C, D, E, F, G, H, I) en ce qui concerne un échange de données en temps réel par l'intermédiaire du réseau.

9. Réseau en temps réel planifié de manière topologique et indépendant du port selon l'une quelconque des revendications 3 à 8, dans lequel les moyens permettant l'échange de données sont conçus pour un échange de données synchronisé par l'intermédiaire du réseau et le dispositif (200) est programmé pour configurer au moins l'autre abonné du réseau (B, C, D, E, F, G, H, I) en ce qui concerne un échange de données synchronisé par l'intermédiaire du réseau.

10. Réseau en temps réel planifié de manière topologique et indépendant du port selon l'une quelconque des revendications 3 à 9, dans lequel les moyens permettant l'échange de données sont conçus pour un échange de données par l'intermédiaire du réseau conformément à la spécification Profinet IRT.

11. Réseau en temps réel planifié de manière topologique et indépendant du port selon la revendication précédente, dans lequel la quantité de données de configuration générées et nécessaires pour la configuration au moins de l'autre abonné du réseau comprend une quantité de paramètres spécifiques RTE calculés par le dispositif (200).

12. Réseau en temps réel planifié de manière topologique et indépendant du port selon la revendication précédente, dans lequel le dispositif (200) consulte une quantité d'informations pertinentes pour la configuration dans le réseau et/ou chez l'autre abonné du réseau (B, C, D, W F, G, H, I), générant sur cette base la quantité de données de configuration nécessaires pour la configuration au moins de l'autre abonné du réseau et, en réponse à au moins une information pertinente pour la configuration donnée par l'utilisateur, transmet au moins une partie de cette quantité générée de données de configuration à l'autre abonné du réseau par l'intermédiaire du réseau.

13. Réseau en temps réel planifié de manière topologique et indépendant du port selon l'une quelconque des revendications 11 et 12, dans lequel le dispositif (200) contrôle tout d'abord la plausibilité en soi de la quantité de données de configuration générées et nécessaires pour la configuration au moins de l'autre abonné du réseau (B, C, D, E, F, G, H, I), avant de transmettre au moins une partie de cette quantité générée de données de configuration à l'autre abonné du réseau par l'intermédiaire du réseau.

14. Réseau en temps réel planifié de manière topologique et indépendant du port selon l'une quelconque des revendications 11 à 13, dans lequel le dispositif (20) contrôle tout d'abord la plausibilité, concernant l'état réel du réseau et au moins de l'autre abonné du réseau, de la quantité de données de configuration générées et nécessaires pour la configuration au moins de l'autre abonné du réseau (B, C, D, E, F, G, H, I), avant de transmettre au moins une partie de cette quantité générée de données de configuration à l'autre abonné du réseau par l'intermédiaire du réseau.

15. Réseau en temps réel planifié de manière topologique et indépendant du port selon l'une quelconque des revendications 11 à 14, dans lequel le dispositif (200) est programmé pour se configurer lui-même au moyen d'au moins une partie de la quantité générée de données de configuration en ce qui concerne l'échange de données par l'intermédiaire du réseau.

16. Réseau en temps réel planifié de manière topologique et indépendant du port selon l'une quelconque des revendications 11 à 15,
dans lequel le dispositif (200) est programmé pour commander l'autre abonné du réseau (B, C, D, E, F, G, H, I) après la configuration, et
dans lequel le dispositif est en particulier une commande pouvant être programmée dans une mémoire.

17. Support de données comprenant un code de programme mis en mémoire sur celui-ci pour la programmation d'un dispositif (200), lequel dispositif, en réponse à au moins une information pertinente pour la configuration donnée par un utilisateur, génère une quantité de données de configuration nécessaires pour la configuration au moins du premier abonné du réseau et transmet au moins une partie de cette quantité générée de données de configuration au premier abonné du réseau par l'intermédiaire du réseau,
le code de programme :
- pour au moins un premier (J) et un autre abonné du réseau (B, C, D, E, F, G, H, I), comprend une liste d'abonnés ou d'appareils (20, 50) présentant respectivement un ensemble de données d'appareil pour l'abonné du réseau respectif, l'ensemble de données d'appareil comprenant une quantité d'informations qui décrivent l'abonné du réseau respectif,
- des blocs fonctionnels destinés à ajouter et à relier le premier et l'autre abonné du réseau, et
- un code de programme d'un programme de configuration pour la configuration du premier et de l'autre abonné du réseau, de telle manière que le premier et l'autre abonné du réseau effectuent automatiquement un contrôle des appareils voisins théoriques planifiés avec les appareils voisins réels installés sur la base d'une configuration théorique de la topologie de réseau et, lorsque le voisinage concorde, l'application de paramètres de communication sur au moins une interface réseau du premier ou de l'autre abonné du réseau est décidée, et
que le contrôle par le premier et l'autre abonné du réseau, lorsque le voisinage concorde, libère la liaison de réseau entre des abonnés du réseau voisins.
